# EUROPEAN PATENT APPLICATION

(11) **EP 4 432 740 A1**
(43) Date of publication of application: **18.09.2024**
(21) Application number: 22900358.7
(22) Date of filing: 24.11.2022
(51) Int. Cl.: H04W 52/02

(54) **CONTROL METHOD AND APPARATUS**

(30) Priority: 02.12.2021 CN 202111459007
(71) Applicant: Huawei Technologies Co., Ltd., Shenzhen, Guangdong 518129 (CN)
(72) Inventor: LIU, Shenghao, Shenzhen, Guangdong 518129 (CN); CHEN, Chunyuan, Shenzhen, Guangdong 518129 (CN); CHEN, Min, Shenzhen, Guangdong 518129 (CN)
(74) Representative: Gill Jennings & Every LLP
(86) International application number: PCT/CN2022/133977
(87) International publication number: WO 2023/098553

(57) **Abstract**

Embodiments of this application provide a control method and an apparatus. The method includes: A radio frequency device sends first information to a control device. The first information indicates an enabling/disabling recommendation for at least one energy-saving feature. The radio frequency device receives an instruction from the control device. The instruction instructs to enable a first energy-saving feature and/or disable a second energy-saving feature, the first energy-saving feature includes at least one energy-saving feature that is recommended to be enabled in the first information, and the second energy-saving feature includes at least one energy-saving feature that is recommended not to be enabled in the first information. According to this application, more energy-saving gains can be obtained when a temperature difference is controlled to be stable and hardware reliability of the radio frequency device is ensured.

## Description

### TECHNICAL FIELD

Embodiments of this application relate to the communication field, and more specifically, to a control method and an apparatus.

### BACKGROUND

With development of mobile communication networks, energy consumption of wireless communication network devices increases, and operators have increasingly urgent requirements for energy saving and consumption reduction. In energy consumption composition of wireless network devices, energy consumption of base station devices accounts for the highest proportion. However, energy consumption of a base station device is mainly energy consumption of a radio frequency module.

To reduce energy consumption of a radio frequency module, a baseband processing unit controls the radio frequency module to enable an energy-saving feature. When a radio frequency module enables an energy-saving feature, to avoid a solder joint failure of the radio frequency module caused by an increase in a temperature difference of a radio frequency device, the radio frequency module may periodically detect a temperature difference of the radio frequency module in a scenario in which the energy-saving feature is enabled. The radio frequency module actively disables the energy-saving feature when the temperature difference of the radio frequency module exceeds a preset threshold, and enables the energy-saving feature when the temperature difference of the radio frequency module recovers to be within the preset threshold.

However, in the foregoing manner, if the temperature difference of the radio frequency module is near the preset threshold, it is easy to cause the radio frequency module to repeatedly enable the energy-saving feature and disable the energy-saving feature, and when the radio frequency module disables the energy-saving feature, energy-saving gains brought by the energy-saving feature are lost.

### SUMMARY

Embodiments of this application provide a control method and an apparatus, to obtain more energy-saving gains while stability of a temperature difference of a radio frequency device is satisfied.

According to a first aspect, a control method is provided. The method includes: A radio frequency device sends first information to a control device. The first information indicates an enabling/disabling recommendation for at least one energy-saving feature. The radio frequency device receives an instruction from the control device. The instruction instructs to enable a first energy-saving feature and/or disable a second energy-saving feature, the first energy-saving feature includes at least one energy-saving feature that is recommended to be enabled in the first information, and the second energy-saving feature includes at least one energy-saving feature that is recommended not to be enabled in the first information.

The enabling/disabling recommendation for the energy-saving feature includes recommending enabling the energy-saving feature or recommending not enabling the energy-saving feature, or the enabling/disabling recommendation for the energy-saving feature includes recommending enabling the energy-saving feature or recommending disabling the energy-saving feature.

Based on the foregoing technical solution, the radio frequency device sends, to the control device, the first information indicating the enabling/disabling recommendation for the at least one energy-saving feature, so that the control device can control, based on the first information, the radio frequency device to enable the first energy-saving feature and/or disable the second energy-saving feature. The control device sends the instruction to the radio frequency device based on the enabling/disabling recommendation that is for the energy-saving feature and that is sent by the radio frequency device. Therefore, the control device can send a more proper instruction to the radio frequency device. For example, the first energy-saving feature that the instruction instructs to enable may be stably enabled for a period of time without causing a temperature difference of the radio frequency device to exceed a temperature difference threshold. This helps obtain more energy-saving gains while stability of the temperature difference of the radio frequency device is satisfied. In addition, the control device indicates to enable and disable the energy-saving feature, and this is also more helpful for the control device to accurately learn of a real enabled/disabled state or an effective state of the energy-saving feature.

With reference to the first aspect, in some implementations of the first aspect, the method further includes: The radio frequency device enables the first energy-saving feature and/or disables the second energy-saving feature according to the instruction.

With reference to the first aspect, in some implementations of the first aspect, the first information is determined based on the temperature difference of the radio frequency device and/or degrees of impact of different energy-saving features on the temperature difference of the radio frequency device.

Based on the foregoing technical solutions, when the radio frequency device determines the enabling/disabling recommendation for the energy-saving feature, the temperature difference of the radio frequency device and/or the degrees of impact of the different energy-saving features on the temperature difference of the radio frequency device are considered. This helps determine a proper enabling/disabling recommendation. For example, if the temperature difference of the radio frequency device is small, the radio frequency device may be recommended to enable more energy-saving features. For another example, if the temperature difference of the radio frequency device is large, and an energy-saving feature has a great impact on the temperature difference of the radio frequency device, the radio frequency device may be recommended not to enable the energy-saving feature.

In a possible implementation, the radio frequency device determines, based on the temperature difference and the degrees of impact of the different energy-saving features on the temperature difference of the radio frequency device, temperature differences of the radio frequency device after enabling of the different energy-saving features for unit duration. The radio frequency device determines the first information based on the temperature differences of the radio frequency device after the enabling of the different energy-saving features for the unit duration.

For example, the radio frequency device determines the first information by comparing the temperature differences of the radio frequency device after the enabling of the different energy-saving features for the unit duration and the temperature difference threshold.

For another example, the radio frequency device determines the first information by comparing the temperature differences of the radio frequency device after enabling of the different energy-saving features.

In another possible implementation, the radio frequency device determines, based on the temperature difference and the degrees of impact of the different energy-saving features on the temperature difference of the radio frequency device, duration needed for the temperature differences of the radio frequency device to increase to the temperature difference threshold after the enabling of the different energy-saving features. The radio frequency device determines the first information based on the duration needed for the temperature differences of the radio frequency device to increase to the temperature difference threshold after the enabling of the different energy-saving features.

For example, the radio frequency device determines the first information by comparing the duration needed for the temperature differences of the radio frequency device to increase to the temperature difference threshold after the enabling of the different energy-saving features and the unit duration.

For another example, the radio frequency device determines the first information by comparing the duration needed for the temperature differences of the radio frequency device to increase to the temperature difference threshold after the enabling of the different energy-saving features.

With reference to the first aspect, in some implementations of the first aspect, the first information includes an identifier of the at least one energy-saving feature.

For example, the at least one energy-saving feature is an energy-saving feature that is recommended to be enabled, in other words, the first information includes an identifier of the energy-saving feature that is recommended to be enabled.

For another example, the at least one energy-saving feature is an energy-saving feature that is recommended not to be enabled, in other words, the first information includes an identifier of the energy-saving feature that is recommended not to be enabled.

For still another example, the at least one energy-saving feature includes the energy-saving feature that is recommended to be enabled and the energy-saving feature that is recommended not to be enabled, in other words, the first information includes both the identifier of the energy-saving feature that is recommended to be enabled and the identifier of the energy-saving feature that is recommended not to be enabled.

With reference to the first aspect, in some implementations of the first aspect, the first information includes first indication information corresponding to the at least one energy-saving feature, and the first indication information indicates whether to recommend enabling the at least one energy-saving feature.

With reference to the first aspect, in some implementations of the first aspect, the first information further includes second indication information corresponding to the at least one energy-saving feature, and the second indication information indicates an enabled/disabled state of the at least one energy-saving feature.

Based on the foregoing technical solutions, when the first information includes the second indication information corresponding to the at least one energy-saving feature, the control device is enabled to determine the enabled/disabled state of the at least one energy-saving feature based on the second indication information. Therefore, inconsistency between an enabled/disabled state of an energy-saving feature displayed on a customer interface of the control device and an actual enabled/disabled state of the energy-saving feature is avoided. In addition, the control device may further send an accurate instruction to the radio frequency device based on actual enabled/disabled states of different energy-saving features and the first information. For example, if the control device determines, based on the second indication information, that an energy-saving feature 1 is in an enabled state, and determines, based on the first information, that the energy-saving feature 1 is an energy-saving feature that is recommended not to be enabled, the control device may send, to the radio frequency device, an instruction for disabling the energy-saving feature 1. If the control device determines, based on the second indication information, that the energy-saving feature 1 is in a disabled state, and determines, based on the first information, that the energy-saving feature 1 is the energy-saving feature that is recommended not to be enabled, the control device may omit to send, to the radio frequency device, the instruction for disabling the energy-saving feature 1, to further simplify signaling and save bandwidth.

With reference to the first aspect, in some implementations of the first aspect, the first energy-saving feature is an energy-saving feature in a disabled state in the at least one energy-saving feature, and the second energy-saving feature is an energy-saving feature in an enabled state in the at least one energy-saving feature.

With reference to the first aspect, in some implementations of the first aspect, the first information further includes temperature information, and the temperature information is used to determine the temperature difference of the radio frequency device.

Based on the foregoing technical solutions, when the first information includes the temperature information, the control device is enabled to determine the temperature difference of the radio frequency device based on the temperature information, so that the control device can send an instruction to the radio frequency device with reference to the temperature difference of the radio frequency device and the first information. This is more helpful to indicate the radio frequency device to enable an energy-saving feature that can be stably enabled for a period of time without causing the temperature difference of the radio frequency device to exceed a temperature difference threshold.

According to a second aspect, a control method is provided. The method includes: A control device receives first information from a radio frequency device. The first information indicates an enabling/disabling recommendation for at least one energy-saving feature. The control device sends an instruction to the radio frequency device based on the first information. The instruction instructs to enable a first energy-saving feature and/or disable a second energy-saving feature, the first energy-saving feature includes at least one energy-saving feature that is recommended to be enabled in the first information, and the second energy-saving feature includes at least one energy-saving feature that is recommended not to be enabled in the first information.

The enabling/disabling recommendation for the energy-saving feature includes recommending enabling the energy-saving feature or recommending not enabling the energy-saving feature, or the enabling/disabling recommendation for the energy-saving feature includes recommending enabling the energy-saving feature or recommending disabling the energy-saving feature.

Based on the foregoing technical solution, the radio frequency device sends, to the control device, the first information indicating the enabling/disabling recommendation for the at least one energy-saving feature, so that the control device can control, based on the first information, the radio frequency device to enable the first energy-saving feature and/or disable the second energy-saving feature. The control device sends the instruction to the radio frequency device based on the enabling/disabling recommendation that is for the energy-saving feature and that is sent by the radio frequency device. Therefore, the control device can send a more proper instruction to the radio frequency device. For example, the first energy-saving feature that the instruction instructs to enable may be stably enabled for a period of time without causing a temperature difference of the radio frequency device to exceed a temperature difference threshold. This helps obtain more energy-saving gains while stability of the temperature difference of the radio frequency device is satisfied.

With reference to the second aspect, in some implementations of the second aspect, the first information is determined based on the temperature difference of the radio frequency device and/or degrees of impact of different energy-saving features on the temperature difference of the radio frequency device.

With reference to the second aspect, in some implementations of the second aspect, the first information includes an identifier of the at least one energy-saving feature.

For example, the at least one energy-saving feature is an energy-saving feature that is recommended to be enabled, in other words, the first information includes an identifier of the energy-saving feature that is recommended to be enabled.

For another example, the at least one energy-saving feature is an energy-saving feature that is recommended not to be enabled, in other words, the first information includes an identifier of the energy-saving feature that is recommended not to be enabled.

For still another example, the at least one energy-saving feature includes the energy-saving feature that is recommended to be enabled and the energy-saving feature that is recommended not to be enabled, in other words, the first information includes both the identifier of the energy-saving feature that is recommended to be enabled and the identifier of the energy-saving feature that is recommended not to be enabled.

With reference to the second aspect, in some implementations of the second aspect, the first information includes first indication information corresponding to the at least one energy-saving feature, and the first indication information indicates whether to recommend enabling the at least one energy-saving feature.

With reference to the second aspect, in some implementations of the second aspect, the first information further includes second indication information corresponding to the at least one energy-saving feature, and the second indication information indicates an enabled/disabled state of the at least one energy-saving feature. The method further includes: The control device determines an enabled/disabled state of the first energy-saving feature based on the second indication information.

Based on the foregoing technical solutions, when the first information includes the second indication information corresponding to the at least one energy-saving feature, the control device is enabled to determine the enabled/disabled state of the at least one energy-saving feature based on the second indication information. Therefore, inconsistency between an enabled/disabled state of an energy-saving feature displayed on a customer interface of the control device and an actual enabled/disabled state of the energy-saving feature is avoided.

With reference to the second aspect, in some implementations of the second aspect, the first energy-saving feature is an energy-saving feature in the disabled state in the at least one energy-saving feature, and the second energy-saving feature is an energy-saving feature in the enabled state in the at least one energy-saving feature.

Based on the foregoing technical solutions, the control device may send an accurate instruction to the radio frequency device based on actual enabled/disabled states of different energy-saving features and the first information.

With reference to the second aspect, in some implementations of the second aspect, the first information further includes temperature information, and the temperature information is used to determine the temperature difference of the radio frequency device. That the control device sends an instruction to the radio frequency device based on the first information includes: The control device sends the instruction to the radio frequency device based on the temperature difference and the first information.

Based on the foregoing technical solutions, when the first information includes the temperature information, the control device is enabled to determine the temperature difference of the radio frequency device based on the temperature information, so that the control device can send an instruction to the radio frequency device with reference to the temperature difference of the radio frequency device and the first information. This is more helpful to indicate the radio frequency device to enable an energy-saving feature that can be stably enabled for a period of time without causing the temperature difference of the radio frequency device to exceed a temperature difference threshold.

According to a third aspect, a control method is provided. The method includes: A control device receives temperature information from a radio frequency device, where the temperature information is used to determine a temperature difference of the radio frequency device. The control device determines an enabling/disabling policy for at least one energy-saving feature based on the temperature difference and/or degrees of impact of different energy-saving features on the temperature difference of the radio frequency device. The control device sends an instruction to the radio frequency device according to the enabling/disabling policy for the at least one energy-saving feature, where the instruction instructs to enable at least one energy-saving feature and/or disable at least one energy-saving feature. In addition, the control device indicates to enable and disable the energy-saving feature, and this is also more helpful for the control device to accurately learn of a real enabled/disabled state or an effective state of the energy-saving feature.

The enabling/disabling policy for the energy-saving feature includes allowing the energy-saving feature to be enabled or not allowing the energy-saving feature to be enabled.

Based on the foregoing technical solutions, when the radio frequency device sends the temperature information to the control device, the control device is enabled to determine the temperature difference of the radio frequency device based on the temperature information, so that the control device can determine enabling/disabling policies for different energy-saving features based on the temperature difference of the radio frequency device and/or degrees of impact of different energy-saving features on the temperature difference of the radio frequency device. This helps determine an energy-saving feature that can be stably enabled for a period of time without causing the temperature difference of the radio frequency device to exceed a temperature difference threshold, to further help obtain more energy-saving gains while stability of the temperature difference of the radio frequency device is satisfied.

In a possible implementation, that the control device determines an enabling/disabling policy for at least one energy-saving feature based on the temperature difference and degrees of impact of different energy-saving features on the temperature difference of the radio frequency device includes: The control device determines, based on the temperature difference and the degrees of impact of the different energy-saving features on the temperature difference of the radio frequency device, temperature differences of the radio frequency device after enabling of the different energy-saving features for unit duration. The control device determines the enabling/disabling policy for the at least one energy-saving feature based on the temperature differences of the radio frequency device after the enabling of the different energy-saving features for the unit duration.

For example, the control device determines the enabling/disabling policy for the at least one energy-saving feature by comparing the temperature differences of the radio frequency device after the enabling of the different energy-saving features for the unit duration and the temperature difference threshold.

For another example, the control device determines the enabling/disabling policy for the at least one energy-saving feature by comparing the temperature differences of the radio frequency device after the enabling of the different energy-saving features.

In another possible implementation, that the control device determines an enabling/disabling policy for at least one energy-saving feature based on the temperature difference and degrees of impact of different energy-saving features on the temperature difference of the radio frequency device includes: The control device determines, based on the temperature difference and the degrees of impact of the different energy-saving features on the temperature difference of the radio frequency device, duration needed for the temperature differences of the radio frequency device to increase to the temperature difference threshold after enabling of the different energy-saving features. The control device determines the enabling/disabling policy for the at least one energy-saving feature based on the duration needed for the temperature differences of the radio frequency device to increase to the temperature difference threshold after the enabling of the different energy-saving features.

For example, the control device determines the enabling/disabling policy for the at least one energy-saving feature by comparing the duration needed for the temperature differences of the radio frequency device to increase to the temperature difference threshold after the enabling of the different energy-saving features and the unit duration.

For another example, the control device determines the enabling/disabling policy for the at least one energy-saving feature by comparing the duration needed for the temperature differences of the radio frequency device to increase to the temperature difference threshold after the enabling of the different energy-saving features.

With reference to the third aspect, in some implementations of the third aspect, the method further includes: The control device receives indication information that is from the radio frequency device and that corresponds to the at least one energy-saving feature, and the indication information indicates an enabled/disabled state of the at least one energy-saving feature. The control device determines the enabled/disabled state of the at least one energy-saving feature based on the indication information.

Based on the foregoing technical solutions, when the radio frequency device sends second indication information corresponding to the at least one energy-saving feature to the control device, the control device is enabled to determine the enabled/disabled state of the at least one energy-saving feature based on the second indication information. Therefore, inconsistency between an enabled/disabled state of an energy-saving feature displayed on a customer interface of the control device and an actual enabled/disabled state of the energy-saving feature is avoided.

With reference to the third aspect, in some implementations of the third aspect, the at least one energy-saving feature that the instruction instructs to enable is an energy-saving feature in a disabled state, and the at least one energy-saving feature that the instruction instructs to disable is an energy-saving feature in an enabled state.

Based on the foregoing technical solutions, the control device may send an accurate instruction to the radio frequency device based on actual enabled/disabled states of different energy-saving features and the first information.

According to a fourth aspect, a control method is provided. The method includes: A radio frequency device sends temperature information to a control device, and the temperature information is used to determine a temperature difference of the radio frequency device. The radio frequency device receives an instruction from the control device, and the instruction instructs to enable at least one energy-saving feature and/or disable at least one energy-saving feature.

Based on the foregoing technical solutions, the radio frequency device sends the temperature information to the control device, and the control device can determine the temperature difference of the radio frequency device based on the temperature information, so that the control device can determine enabling/disabling policies for different energy-saving features based on the temperature difference of the radio frequency device and/or degrees of impact of different energy-saving features on the temperature difference of the radio frequency device. This helps determine an energy-saving feature that can be stably enabled for a period of time without causing the temperature difference of the radio frequency device to exceed a temperature difference threshold, to further help obtain more energy-saving gains while stability of the temperature difference of the radio frequency device is satisfied.

With reference to the fourth aspect, in some implementations of the fourth aspect, the method further includes: The radio frequency device sends indication information to the control device, and the indication information indicates an enabled/disabled state of the at least one energy-saving feature.

Based on the foregoing technical solutions, the radio frequency device sends the indication information to the control device, and the control device is enabled to determine the enabled/disabled state of the at least one energy-saving feature based on the indication information. Therefore, inconsistency between an enabled/disabled state of an energy-saving feature displayed on a customer interface of the control device and an actual enabled/disabled state of the energy-saving feature is avoided. In addition, the control device may further send an accurate instruction to the radio frequency device based on actual enabled/disabled states of different energy-saving features. For example, if the control device determines, based on the indication information, that an energy-saving feature 1 is in an enabled state, and determines, according to an enabling/disabling policy for the energy-saving feature 1, that the energy-saving feature 1 is an energy-saving feature that is not allowed to be enabled, the control device may send, to the radio frequency device, an instruction for disabling the energy-saving feature 1.

With reference to the fourth aspect, in some implementations of the fourth aspect, the at least one energy-saving feature that the instruction instructs to enable is an energy-saving feature in a disabled state, and the at least one energy-saving feature that the instruction instructs to disable is an energy-saving feature in an enabled state.

According to a fifth aspect, an apparatus is provided. The apparatus includes a transceiver unit, the transceiver unit is configured to send first information to a control device, and the first information indicates an enabling/disabling recommendation for at least one energy-saving feature. The transceiver unit is further configured to receive an instruction from the control device. The instruction instructs to enable a first energy-saving feature and/or disable a second energy-saving feature, the first energy-saving feature includes at least one energy-saving feature that is recommended to be enabled in the first information, and the second energy-saving feature includes at least one energy-saving feature that is recommended not to be enabled in the first information.

With reference to the fifth aspect, in some implementations of the fifth aspect, the apparatus further includes a processing unit. The processing unit is configured to enable the first energy-saving feature and/or disable the second energy-saving feature according to the instruction.

With reference to the fifth aspect, in some implementations of the fifth aspect, the first information is determined based on a temperature difference of the apparatus and/or degrees of impact of different energy-saving features on the temperature difference of the apparatus.

With reference to the fifth aspect, in some implementations of the fifth aspect, the apparatus further includes a processing unit. The processing unit is further configured to determine, based on the temperature difference and the degrees of impact of the different energy-saving features on the temperature difference of the apparatus, temperature differences of the apparatus after enabling of the different energy-saving features for unit duration. The processing unit is further configured to determine the first information based on the temperature differences of the apparatus after the enabling of the different energy-saving features for the unit duration.

With reference to the fifth aspect, in some implementations of the fifth aspect, the apparatus further includes a processing unit. The processing unit is configured to determine, based on the temperature difference and the degrees of impact of the different energy-saving features on the temperature difference of the apparatus, duration needed for the temperature differences of the apparatus to increase to a temperature difference threshold after enabling of the different energy-saving features. The processing unit is further configured to determine the first information based on the duration needed for the temperature differences of the apparatus to increase to the temperature difference threshold after the enabling of the different energy-saving features.

With reference to the fifth aspect, in some implementations of the fifth aspect, the first information includes an identifier of the at least one energy-saving feature.

With reference to the fifth aspect, in some implementations of the fifth aspect, the first information includes first indication information corresponding to the at least one energy-saving feature, and the first indication information indicates whether to recommend enabling the at least one energy-saving feature.

With reference to the fifth aspect, in some implementations of the fifth aspect, the first information further includes second indication information corresponding to the at least one energy-saving feature, and the second indication information indicates an enabled/disabled state of the at least one energy-saving feature.

With reference to the fifth aspect, in some implementations of the fifth aspect, the first energy-saving feature is an energy-saving feature in a disabled state in the at least one energy-saving feature, and the second energy-saving feature is an energy-saving feature in an enabled state in the at least one energy-saving feature.

With reference to the fifth aspect, in some implementations of the fifth aspect, the first information further includes temperature information, and the temperature information is used to determine the temperature difference of the apparatus.

According to a sixth aspect, an apparatus is provided. The apparatus includes a transceiver unit, and the transceiver unit is configured to receive first information from a radio frequency device. The first information indicates an enabling/disabling recommendation for at least one energy-saving feature. The transceiver unit is further configured to send an instruction to the radio frequency device based on the first information. The instruction instructs to enable a first energy-saving feature and/or disable a second energy-saving feature, the first energy-saving feature includes at least one energy-saving feature that is recommended to be enabled in the first information, and the second energy-saving feature includes at least one energy-saving feature that is recommended not to be enabled in the first information.

With reference to the sixth aspect, in some implementations of the sixth aspect, the first information is determined based on a temperature difference of the radio frequency device and/or degrees of impact of different energy-saving features on the temperature difference of the radio frequency device.

With reference to the sixth aspect, in some implementations of the sixth aspect, the first information includes an identifier of the at least one energy-saving feature.

With reference to the sixth aspect, in some implementations of the sixth aspect, the first information includes first indication information corresponding to the at least one energy-saving feature, and the first indication information indicates whether to recommend enabling the at least one energy-saving feature.

With reference to the sixth aspect, in some implementations of the sixth aspect, the first information further includes second indication information corresponding to the at least one energy-saving feature, and the second indication information indicates an enabled/disabled state of the at least one energy-saving feature. The apparatus further includes a processing unit, and the processing unit is configured to determine an enabled/disabled state of the first energy-saving feature based on the second indication information.

With reference to the sixth aspect, in some implementations of the sixth aspect, the first information further includes temperature information, and the temperature information is used to determine the temperature difference of the radio frequency device. The transceiver unit is further configured to send the instruction to the radio frequency device based on the temperature difference and the first information.

With reference to the sixth aspect, in some implementations of the sixth aspect, the first energy-saving feature is an energy-saving feature in a disabled state in the at least one energy-saving feature, and the second energy-saving feature is an energy-saving feature in an enabled state in the at least one energy-saving feature.

According to a seventh aspect, an apparatus is provided. The apparatus includes a transceiver unit and a processing unit. The transceiver unit is configured to receive temperature information from a radio frequency device, and the temperature information is used to determine a temperature difference of the radio frequency device. The processing unit is configured to determine an enabling/disabling policy for at least one energy-saving feature based on the temperature difference and/or degrees of impact of different energy-saving features on the temperature difference of the radio frequency device. The transceiver unit is further configured to send an instruction to the radio frequency device according to the enabling/disabling policy for the at least one energy-saving feature, where the instruction instructs to enable at least one energy-saving feature and/or disable at least one energy-saving feature.

With reference to the seventh aspect, in some implementations of the seventh aspect, the processing unit is further configured to determine, based on the temperature difference and/or the degrees of impact of the different energy-saving features on the temperature difference of the radio frequency device, temperature differences of the radio frequency device after enabling of the different energy-saving features for unit duration. The processing unit further configured to determine the enabling/disabling policy for the at least one energy-saving feature based on the temperature differences of the radio frequency device after the enabling of the different energy-saving features for the unit duration.

With reference to the seventh aspect, in some implementations of the seventh aspect, the processing unit is further configured to determine, based on the temperature difference and the degrees of impact of the different energy-saving features on the temperature difference of the radio frequency device, duration needed for the temperature differences of the radio frequency device to increase to a temperature difference threshold after enabling of the different energy-saving features. The processing unit is further configured to determine the enabling/disabling policy for the at least one energy-saving feature based on the duration needed for the temperature differences of the radio frequency device to increase to the temperature difference threshold after the enabling of the different energy-saving features.

With reference to the seventh aspect, in some implementations of the seventh aspect, the transceiver unit is further configured to receive indication information that is from the radio frequency device and that corresponds to the at least one energy-saving feature, and the indication information indicates an enabled/disabled state of the at least one energy-saving feature. The processing unit is further configured to determine the enabled/disabled state of the at least one energy-saving feature based on the indication information.

With reference to the seventh aspect, in some implementations of the seventh aspect, the at least one energy-saving feature that the instruction instructs to enable is an energy-saving feature in a disabled state, and the at least one energy-saving feature that the instruction instructs to disable is an energy-saving feature in an enabled state.

According to an eighth aspect, an apparatus is provided. The apparatus includes a transceiver unit, the transceiver unit is configured to send temperature information to a control device, and the temperature information is used to determine a temperature difference of the apparatus. The transceiver unit is further configured to receive an instruction from the control device, and the instruction instructs to enable at least one energy-saving feature and/or disable at least one energy-saving feature.

With reference to the eighth aspect, in some implementations of the eighth aspect, the transceiver unit is further configured to send indication information to the control device, and the indication information indicates an enabled/disabled state of the at least one energy-saving feature.

With reference to the eighth aspect, in some implementations of the eighth aspect, the at least one energy-saving feature that the instruction instructs to enable is an energy-saving feature in a disabled state, and the at least one energy-saving feature that the instruction instructs to disable is an energy-saving feature in an enabled state.

According to a ninth aspect, an apparatus is provided. The apparatus includes a radio frequency module and a control module. The radio frequency module is configured to send first information to the control module, and the first information indicates an enabling/disabling recommendation for at least one energy-saving feature. The control module is configured to send an instruction to the radio frequency module based on the first information, and the instruction instructs the radio frequency module to enable a first energy-saving feature and/or disable a second energy-saving feature. The first energy-saving feature includes at least one energy-saving feature that is recommended to be enabled in the first information, and the second energy-saving feature includes at least one energy-saving feature that is recommended not to be enabled in the first information.

With reference to the ninth aspect, in some implementations of the ninth aspect, the radio frequency module is further configured to enable the first energy-saving feature and/or disable the second energy-saving feature according to the instruction.

With reference to the ninth aspect, in some implementations of the ninth aspect, the first information is determined based on a temperature difference of the radio frequency module and/or degrees of impact of different energy-saving features on the temperature difference of the radio frequency module.

With reference to the ninth aspect, in some implementations of the ninth aspect, the radio frequency module is further configured to determine, based on the temperature difference and the degrees of impact of the different energy-saving features on the temperature difference of the radio frequency module, temperature differences of the radio frequency module after enabling of the different energy-saving features for unit duration. The radio frequency module is further configured to determine the first information based on the temperature differences of the radio frequency module after the enabling of the different energy-saving features for the unit duration.

With reference to the ninth aspect, in some implementations of the ninth aspect, the radio frequency module is further configured to determine, based on the temperature difference and the degrees of impact of the different energy-saving features on the temperature difference of the radio frequency module, duration needed for the temperature differences of the radio frequency module to increase to a temperature difference threshold after the enabling of the different energy-saving features. The radio frequency module is further configured to determine the first information based on the duration needed for the temperature differences of the radio frequency module to increase to the temperature difference threshold after the enabling of the different energy-saving features.

With reference to the ninth aspect, in some implementations of the ninth aspect, the first information includes an identifier of the at least one energy-saving feature.

With reference to the ninth aspect, in some implementations of the ninth aspect, the first information includes first indication information corresponding to the at least one energy-saving feature, and the first indication information indicates whether to recommend enabling the at least one energy-saving feature.

With reference to the ninth aspect, in some implementations of the ninth aspect, the first information further includes second indication information corresponding to the first energy-saving feature, and the second indication information indicates an enabled/disabled state of the at least one energy-saving feature. The control module is further configured to determine the enabled/disabled state of the at least one energy-saving feature based on the second indication information.

With reference to the ninth aspect, in some implementations of the ninth aspect, the first energy-saving feature is an energy-saving feature in a disabled state in the at least one energy-saving feature, and the second energy-saving feature is an energy-saving feature in an enabled state in the at least one energy-saving feature.

With reference to the ninth aspect, in some implementations of the ninth aspect, the first information further includes temperature information, and the temperature information is used to determine the temperature difference of the radio frequency module. The control module is further configured to send the instruction to the radio frequency module based on the temperature difference and the first information.

With reference to the ninth aspect, in some implementations of the ninth aspect, the radio frequency module is a remote radio unit. The control module is a baseband processing unit.

According to a tenth aspect, this application provides an apparatus, including a processor. The processor is coupled to a memory, and may be configured to execute instructions in the memory, to perform the method in any one of the first aspect or the possible implementations of the first aspect, or perform the method in any one of the fourth aspect or the possible implementations of the fourth aspect. Optionally, the apparatus further includes the memory. The apparatus further includes a communication interface, and the processor is coupled to the communication interface.

In an implementation, the apparatus is a radio frequency device. When the apparatus is a radio frequency device, the communication interface may be a transceiver or an input/output interface.

In another implementation, the apparatus is a chip or a chip system configured in a radio frequency device. When the apparatus is a chip or a chip system configured in a radio frequency device, the communication interface may be an input/output interface.

The transceiver may be a transceiver circuit. The input/output interface may be an input/output circuit.

According to an eleventh aspect, this application provides an apparatus, including a processor. The processor is coupled to a memory, and may be configured to execute instructions in the memory, to perform the method in any one of the second aspect or the possible implementations of the second aspect, or perform the method in any one of the third aspect or the possible implementations of the third aspect. Optionally, the apparatus further includes the memory. The apparatus further includes a communication interface, and the processor is coupled to the communication interface.

In an implementation, the apparatus is a control device. When the apparatus is a control device, the communication interface may be a transceiver or an input/output interface.

In another implementation, the apparatus is a chip or a chip system configured in a control device. When the apparatus is a chip or a chip system configured in a control device, the communication interface may be an input/output interface.

The transceiver may be a transceiver circuit. The input/output interface may be an input/output circuit.

According to a twelfth aspect, this application provides a processor, including an input circuit, an output circuit, and a processing circuit. The processing circuit is configured to: receive a signal through the input circuit, and transmit a signal through the output circuit, to enable the processor to perform the methods in the foregoing aspects.

In a specific implementation process, the processor may be a chip, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in embodiments of this application.

According to a thirteenth aspect, this application provides a processing apparatus, including a communication interface and a processor. The communication interface is coupled to the processor. The communication interface is configured to input and/or output information. The information includes at least one of instructions or data. The processor is configured to execute a computer program, to enable the processing apparatus to perform the methods in the foregoing aspects.

According to a fourteenth aspect, this application provides a processing apparatus, including a processor and a memory. The processor is configured to: read instructions stored in the memory, receive a signal by using a receiver, and transmit a signal by using a transmitter, to enable the processing apparatus to perform the methods in the foregoing aspects.

Optionally, there are one or more processors. If there is a memory, there may alternatively be one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, a related information exchange process, for example, sending indication information may be a process of outputting indication information from the processor, and receiving indication information may be a process of inputting received indication information into the processor. Specifically, the information output by the processor may be output to the transmitter, and the input information received by the processor may be from the receiver. The transmitter and the receiver may be collectively referred to as a transceiver.

The apparatuses according to the thirteenth aspect and the fourteenth aspect may be chips. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fifteenth aspect, this application provides a computer program product. The computer program product includes a computer program (which may also be referred to as code or instructions). When the computer program is run, a computer is enabled to perform the methods in the foregoing aspects.

According to a sixteenth aspect, this application provides a computer-readable storage medium. The computer-readable storage medium stores a computer program (which may also be referred to as code or instructions). When the computer program is run on a computer, the computer is enabled to perform the methods in the foregoing aspects.

According to a seventeenth aspect, this application provides a system, including the foregoing control device and radio frequency device.

### BRIEF DESCRIPTION OF DRAWINGS

FIG. 1 is a schematic diagram of a system applicable to a method according to an embodiment of this application;
FIG. 2 is a schematic diagram of symbol power saving;
FIG. 3 is a schematic diagram of channel shutdown;
FIG. 4 is a schematic diagram of cell shutdown;
FIG. 5 is a schematic diagram of a method for controlling a temperature difference in an energy-saving scenario;
FIG. 6 is a schematic flowchart of a control method according to an embodiment of this application;
FIG. 7 is a schematic flowchart of a control method according to another embodiment of this application;
FIG. 8 is a schematic block diagram of an apparatus according to an embodiment of this application;
FIG. 9 is a schematic diagram of a structure of an apparatus according to an embodiment of this application;
FIG. 10 is a schematic diagram of a structure of an apparatus according to an embodiment of this application; and
FIG. 11 is a schematic diagram of a chip system according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a 6th generation (6th generation, 6G) system, a future communication system, or the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (Internet of Things, IoT) communication system, a vehicle to everything (vehicle to everything, V2X) communication system, an uncrewed aerial vehicle (uncrewed aerial vehicle, UAV) communication system, or another communication system.

In the descriptions of this application, "/" represents an "or" relationship between associated objects unless otherwise specified. For example, A/B may represent A or B. The term "and/or" in this application represents only an association relationship for describing associated objects and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in the embodiments of this application to distinguish between same items or similar items that have basically same functions and purposes. A person skilled in the art may understand that the terms such as "first" and "second" do not limit a quantity and an execution sequence, and the terms such as "first" and "second" do not indicate a definite difference. In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In addition, a network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

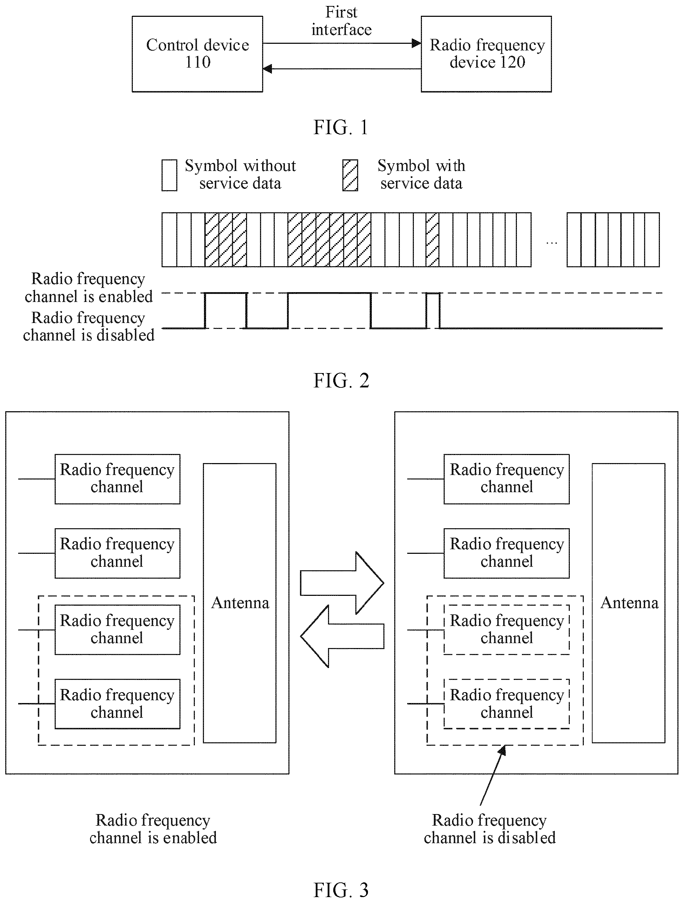

For ease of understanding of embodiments of this application, an application scenario of the embodiments of this application is first described in detail with reference to FIG. 1.

FIG. 1 shows a system architecture applicable to a method according to an embodiment of this application. As shown in FIG. 1, the system includes a control device 110 and a radio frequency device 120. The control device 110 may be used as a main device of a base station, process a digital baseband signal, and provide control and management for a function of each device of the base station. The radio frequency device 120 may be used as a radio frequency module of the base station, and may be configured to process an intermediate frequency signal and/or a radio frequency signal, or may be configured to receive and transmit a radio signal.

The control device 110 and the radio frequency device 120 are connected through a first interface. The first interface may be any one of the following interfaces: a common public radio interface (common public radio interface, CPRI), an enhanced CPRI (enhanced CPRI, eCPRI) interface, or a future-defined interface for connecting a control device and a radio frequency device. For example, the first interface may be referred to as a fronthaul (fronthaul) interface.

It should be noted that specific types of the control device 110 and the radio frequency device 120 are not limited in this embodiment of this application. Any two devices connected through the first interface may be equivalent to the control device 110 and the radio frequency device 120 in this embodiment of this application. For example, the control device 110 may be any one of the following: a baseband processing unit (baseband unit, BBU), a distributed unit (distributed unit, DU), or a centralized unit (centralized unit, CU). For example, the radio frequency device 120 may be any one of the following: a remote radio unit (remote radio unit, RRU), a radio frequency unit (radio unit, RU), or an active antenna unit (active antenna unit, AAU).

In some deployments, the control device 110 may include a centralized unit (centralized unit, CU) and a DU. The DU is connected to the radio frequency device 120 through the first interface. Further, the CU may alternatively use an architecture in which a control plane (control plane, CP) and a user plane (user plane, UP) are separated. In other words, the CU may include a CU-CP entity and a CU-UP entity.

It should be further noted that, in FIG. 1, only an example in which the control device 110 is connected to one radio frequency device 120 is used, and the control device 110 may further be connected to more radio frequency devices.

Components of the radio frequency module (for example, a component, and a printed circuit board (printed circuit board, PCB)) may be connected together by soldering, and solder joints between the components of the radio frequency module greatly affect functions of the radio frequency module. If the solder joints fail, the functions of the radio frequency module are partially or completely abnormal.

Usually, main factors that affect reliability of the solder joint of the radio frequency module are structural constraints, component packaging, a temperature difference between a service and the environment, and a service temperature difference. An impact of a temperature difference on the reliability of the solder joint of the radio frequency module is used as an example, the solder joint of the radio frequency module is affected by stress caused by different thermal expansion sizes of components, PCBs, and the like in a temperature change process, and the solder joint fails after a long temperature difference cycle. A temperature difference refers to a difference between a highest temperature and a lowest temperature in a period of time. A temperature difference of a radio frequency device described in the following embodiment refers to a difference between a highest temperature of the radio frequency device and a lowest temperature of the radio frequency device in a period of time. The temperature difference of the radio frequency device is determined by an ambient temperature difference and a service temperature difference. The ambient temperature difference refers to a temperature difference of the environment in which the radio frequency device is located in a period of time. The service temperature difference refers to a temperature difference of the radio frequency device caused by execution of different services by the radio frequency device in a period of time when a temperature of the environment in which the radio frequency device is located remains unchanged.

With the development of mobile communication networks, energy consumption of wireless network devices increases, and operators have increasingly urgent requirements for energy saving and consumption reduction. In energy consumption composition of wireless network devices, energy consumption of base station devices accounts for the highest proportion. However, energy consumption of a base station device is mainly energy consumption of a radio frequency module.

To reduce the energy consumption of the base station device, energy-saving technologies (or referred to as energy-saving features) such as symbol power saving, channel shutdown, carrier shutdown (or referred to as cell shutdown), and deep dormancy are proposed. A basic principle of these technologies is to shut down some hardware resources of a base station during network off-peak hours, to achieve an energy-saving effect. For example, triggering of each energy-saving technology needs to be determined based on service load. If service load of a base station is lower than a preset energy-saving triggering threshold and an energy-saving triggering condition is met, a corresponding energy-saving technology may be executed, to enable the base station device to enter a corresponding energy-saving state.

As shown in FIG. 2, after enabling an energy-saving feature of symbol power saving, a base station shuts down all radio frequency channels of the base station in idle symbol time when there is no service data transmission, and enables all radio frequency channels in symbol time when there is service data transmission. As shown in FIG. 3, when service load of a base station is low, the channel shutdown technology supports shutdown of some radio frequency channels of the base station, to reduce energy consumption of the base station.

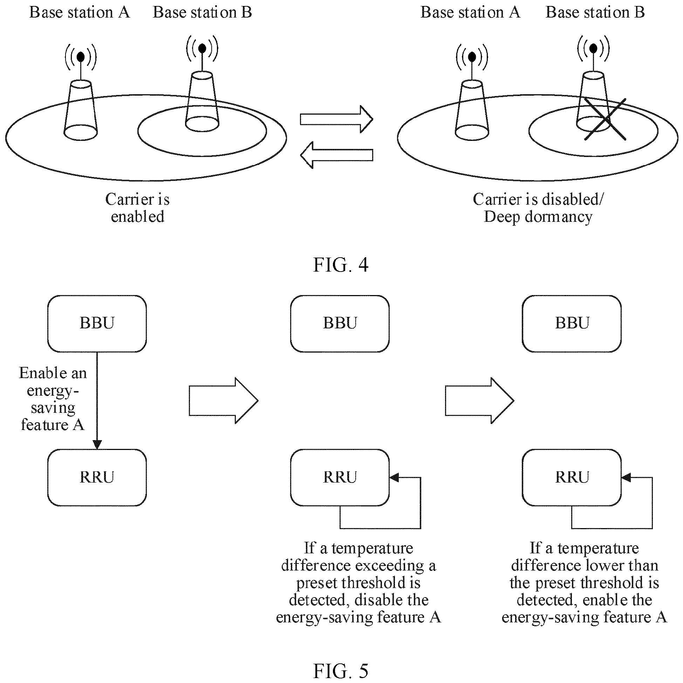

As shown in FIG. 4, the carrier shutdown technology is mainly used in a scenario in which a plurality of base stations provide coverage in a same area at the same time. One base station is used as a coverage layer base station, and another base station is planned as a capacity layer base station. A co-coverage relationship exists between base stations in the area. The carrier shutdown technology determines a service volume of each base station in the coverage area, uses a base station with low service load as an energy-saving base station, and shuts down all radio frequency channels, to achieve an objective of energy saving. Based on shutting down all radio frequency channels of a base station, the deep dormancy technology further shuts down more hardware resources such as a digital baseband chip of the base station to reduce more energy consumption.

As shown in FIG. 5, to reduce energy consumption of a radio frequency module, a baseband processing unit (for example, a BBU) controls a radio frequency module (for example, an RRU) to enable an energy-saving feature (for example, an energy-saving feature A). When the radio frequency module enables the energy-saving feature, a main factor that affects the reliability of the solder joint of the radio frequency module is an increase in a service temperature difference. To avoid a solder joint failure of the radio frequency module caused by the increase in the service temperature difference, the radio frequency module may periodically detect a temperature difference of the radio frequency module in a scenario in which the energy-saving feature is enabled. The radio frequency module actively disables the energy-saving feature when the temperature difference of the radio frequency module exceeds a preset threshold, and enables the energy-saving feature when the temperature difference of the radio frequency module recovers to be within the preset threshold.

However, in the foregoing manner, if the temperature difference of the radio frequency module is near the preset threshold, it is easy to cause the radio frequency module to repeatedly enable the energy-saving feature and disable the energy-saving feature, and when the radio frequency module disables the energy-saving feature, energy-saving gains brought by the energy-saving feature are lost. In addition, that the radio frequency module determines to enable the energy-saving feature or disable the energy-saving feature based on the temperature difference of the radio frequency module also causes inconsistency between an actual enabled/disabled state of the energy-saving feature and an enabled/disabled state of an energy-saving feature displayed on a customer interface of a control device.

In view of this, embodiments of this application provide a control method, to obtain more energy-saving gains while stability of a temperature difference of a radio frequency device is satisfied.

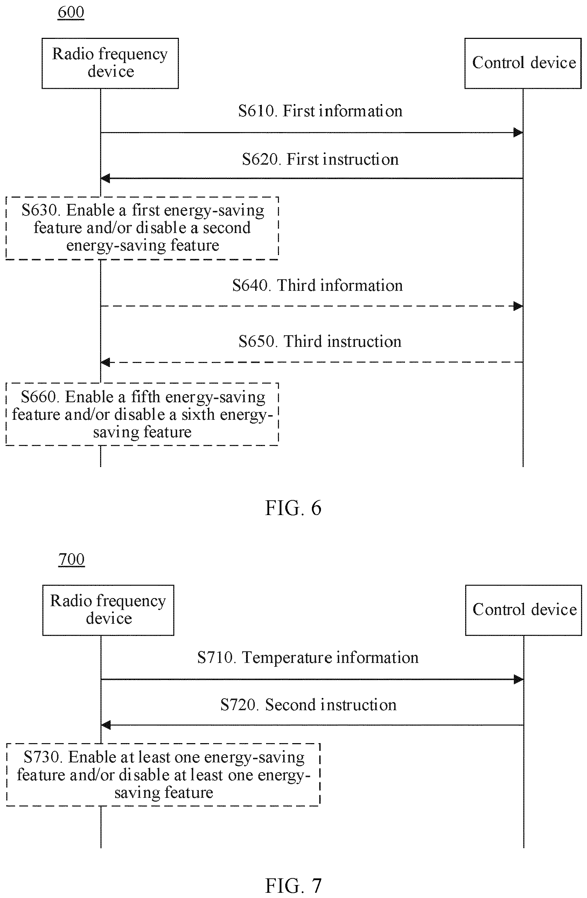

FIG. 6 is a schematic flowchart of a control method according to an embodiment of this application. As shown in FIG. 6, a method 600 may include S610 to S660. The following describes the steps in detail.

S610. A radio frequency device sends first information. Correspondingly, in S610, a control device receives the first information.

For example, the radio frequency device may be an RRU, an RU, or an AAU, and the control device may be a BBU, a BU, a CU, or a DU.

The first information indicates an enabling/disabling recommendation for at least one energy-saving feature. For example, the energy-saving feature includes one or more of the following: a deep dormancy feature, a carrier shutdown feature, a channel shutdown feature, and a symbol power saving feature. The enabling/disabling recommendation for the energy-saving feature includes recommending enabling the energy-saving feature or recommending not enabling the energy-saving feature. Alternatively, the enabling/disabling recommendation for the energy-saving feature includes recommending enabling the energy-saving feature or recommending disabling the energy-saving feature. Enabling an energy-saving feature may also be understood as activating the energy-saving feature or enabling the energy-saving feature to take effect. For example, enabling an energy-saving feature may refer to disabling a hardware resource corresponding to the energy-saving feature, to achieve an objective of energy saving. Disabling an energy-saving feature may also be understood as deactivating the energy-saving feature or enabling the energy-saving feature not to take effect. For example, disabling an energy-saving feature may refer to enabling a hardware resource corresponding to the energy-saving feature. For example, enabling the channel shutdown feature means shutting down some radio frequency channels when service load is low, and disabling the channel shutdown feature means always enabling all radio frequency channels.

For example, the first information is determined based on a first temperature difference of the radio frequency device and/or degrees of impact of different energy-saving features on the temperature difference of the radio frequency device. The first temperature difference indicates a difference between a highest temperature and a lowest temperature of the radio frequency device in a first detection periodicity. Duration of the first detection periodicity may be one hour, 12 hours, one day, or the like. This is not limited in embodiments of this application. A degree of impact of the energy-saving feature on the temperature difference of the radio frequency device is proportional to an energy-saving gain brought by the energy-saving feature. In other words, a greater energy-saving gain brought by the energy-saving feature indicates a greater degree of impact of the energy-saving feature on the temperature difference of the radio frequency device after the enabling of the energy-saving feature. It should be noted that, after the energy-saving feature is enabled on the radio frequency device, the lowest temperature of the radio frequency device decreases, and the temperature difference of the radio frequency device increases. Therefore, the degree of impact of the energy-saving feature on the radio frequency device mentioned in embodiments of this application may be a degree of increase in the temperature difference of the radio frequency device after the enabling of the energy-saving feature.

For example, the degrees of impact of the different energy-saving features on the temperature difference of the radio frequency device may be indicated by an increment in the temperature difference of the radio frequency device after enabling of the energy-saving feature for unit duration. The unit duration may be a minute, a quarter of an hour, an hour, a day, or the like. This is not limited in embodiments of this application. The increment in the temperature difference of the radio frequency device may be indicated by a difference between the temperature differences of the radio frequency device before and after the enabling of the energy-saving feature, or may be indicated by an increase percentage of the temperature difference of the radio frequency device after the enabling of the energy-saving feature. This is not limited in embodiments of this application. For example, the degrees of impact of the different energy-saving features on the temperature difference of the radio frequency device are shown in Table 1.

**Table 1**

| Energy-saving feature | Energy-saving gain | Increment in the temperature difference of the radio frequency device after the enabling of the energy-saving feature for one quarter of an hour |
|---|---|---|
| Energy-saving feature 1 | 10% | 1°C or 5% |
| Energy-saving feature 2 | 20% | 2°C or 10% |
| Energy-saving feature 3 | 30% | 3°C or 15% |
| Energy-saving feature 4 | 40% | 4°C or 20% |
| Energy-saving feature 5 | 50% | 5°C or 25% |

The degrees of impact of the different energy-saving features on the temperature difference of the radio frequency device may be preconfigured in the radio frequency device, or may be determined by the radio frequency device based on historical data. This is not limited in embodiments of this application. The historical data includes duration for enabling different energy-saving features, temperature differences of the radio frequency device before and after the enabling of different energy-saving features, and the like.

A manner of determining the first information by the radio frequency device is not limited in embodiments of this application.

In a possible implementation, the radio frequency device determines the first information based on the first temperature difference. For example, if the first temperature difference is low (for example, the first temperature difference is 1/2 of a temperature difference threshold), the radio frequency device determines that all energy-saving features are recommended to be enabled. If the first temperature difference is high (for example, the first temperature difference is close to the temperature difference threshold), the radio frequency device determines that all energy-saving features are recommended not to be enabled. Further, the radio frequency device determines the first information based on enabling/disabling recommendations for different energy-saving features.

In a possible implementation, the radio frequency device determines the first information based on the degrees of impact of the different energy-saving features on the temperature difference of the radio frequency device. For example, the radio frequency device determines that an energy-saving feature that has a maximum impact on the temperature difference of the radio frequency device is recommended not to be enabled. Alternatively, the radio frequency device determines that an energy-saving feature that has a minimum impact on the temperature difference of the radio frequency device is recommended to be enabled. Further, the radio frequency device determines the first information based on the enabling/disabling recommendations for the different energy-saving features.

In a possible implementation, the radio frequency device determines, based on the first temperature difference and the degrees of impact of the different energy-saving features on the temperature difference of the radio frequency device, temperature differences of the radio frequency device after enabling of the different energy-saving features for unit duration. The radio frequency device determines the first information based on temperature differences of the radio frequency device after enabling of the different energy-saving features for preset duration. For example, the radio frequency device may determine the enabling/disabling recommendations for different energy-saving features by comparing the temperature differences of the radio frequency device after the enabling of different energy-saving features for the preset duration and the temperature difference threshold. For example, if a temperature difference of the radio frequency device after an energy-saving feature is enabled for unit duration is not less than the temperature difference threshold, the radio frequency device may determine that the energy-saving feature is recommended not to be enabled, or when an energy-saving feature has been enabled, the radio frequency device may determine that the energy-saving feature is recommended to be disabled. If the temperature difference of the radio frequency device after an energy-saving feature is enabled for the unit duration is lower than the temperature difference threshold, the radio frequency device may determine that the energy-saving feature is recommended to be enabled. For another example, the radio frequency device may determine the enabling/disabling recommendations for different energy-saving features by comparing the temperature differences of the radio frequency device after the enabling of the different energy-saving features for the unit duration. For example, the radio frequency device determines that an energy-saving feature corresponding to a minimum temperature difference is recommended to be enabled, or the radio frequency device determines that an energy-saving feature corresponding to a maximum temperature difference is recommended not to be enabled. Further, the radio frequency device determines the first information based on the enabling/disabling recommendations for the different energy-saving features.

For example, the temperature difference threshold indicates a maximum temperature difference of the radio frequency device that is allowed without affecting reliability of a solder joint of the radio frequency device. The unit duration may indicate duration for which an energy-saving feature that is expected by the radio frequency device is enabled.

For example, the first temperature difference is 20°C, the temperature difference threshold is 25°C, and the unit duration is 15 minutes. Temperature differences that are reached by the radio frequency device after enabling of different energy-saving features for 15 minutes and that are determined by the radio frequency device based on the first temperature difference and Table 1 are shown in Table 2.

**Table 2**

| Energy-saving feature | Temperature difference of the radio frequency device after the energy-saving feature is enabled for 15 minutes |
|---|---|
| Energy-saving feature 1 | 21°C |
| Energy-saving feature 2 | 22°C |
| Energy-saving feature 3 | 23°C |
| Energy-saving feature 4 | 24°C |
| Energy-saving feature 5 | 25°C |

It can be learned from Table 2 that, after any one of the energy-saving feature 1 to the energy-saving feature 4 is enabled for 15 minutes, the temperature differences of the radio frequency device are lower than 25°C. Therefore, the radio frequency device determines that the energy-saving feature recommended to be enabled includes the energy-saving feature 1 to the energy-saving feature 4. After the energy-saving feature 5 is enabled for 15 minutes, the temperature difference of the radio frequency device may reach 25°C. Therefore, the radio frequency device determines that the energy-saving feature 5 is recommended not to be enabled. Therefore, the radio frequency device may determine that the first information indicates that enabling/disabling recommendations for the energy-saving feature 1 to the energy-saving feature 4 are being recommended to be enabled, and/or the first information indicates that an enabling/disabling recommendation for the energy-saving feature 5 is being recommended not to be enabled.

Alternatively, it can be learned from Table 2 that, if the minimum temperature difference corresponds to the energy-saving feature 1, the radio frequency device determines that the energy-saving feature 1 is recommended to be enabled, and if the maximum temperature difference corresponds to the energy-saving feature 5, the radio frequency device determines that the energy-saving feature 5 is recommended not to be enabled.

For example, the radio frequency device determines, based on a first model, the temperature differences of the radio frequency device after the enabling of the different energy-saving features for the unit duration. Input parameters of the first model are a first temperature difference, unit duration, and identifiers of different energy-saving features or energy-saving gains of different energy-saving features, and an output parameter of the first model is temperature differences of the radio frequency device after enabling of different energy-saving features for unit duration. For example, the first model is obtained through training based on historical data, and the historical data includes duration for which different energy-saving features are enabled, and temperature differences of the radio frequency device before and after the enabling of different energy-saving features. The identifiers or energy-saving gains of the different energy-saving features, the duration for which the different energy-saving features are enabled, and the temperature differences of the radio frequency device before the enabling of the different energy-saving features are used as input parameters for training the first model, and the temperature differences of the radio frequency device after the enabling of the different energy-saving features are used to determine whether the first model is successfully trained. For example, an identifier or energy-saving gain of the energy-saving feature 1, duration for which the energy-saving feature 1 is enabled, and a temperature difference of the radio frequency device before enabling of the energy-saving feature 1 are used as input parameters for training the first model, data output by the first model is compared with a temperature difference of the radio frequency device after the enabling of the energy-saving feature 1. If a difference between the two is less than a preset threshold, it is considered that the first model is successfully trained; and if the difference between the two is not less than the preset threshold, the first model continues to be trained.

In another possible implementation, the radio frequency device determines, based on the first temperature difference and the degrees of impact of the different energy-saving features on the temperature difference of the radio frequency device, duration needed for the temperature differences of the radio frequency device to increase to the temperature difference threshold after the enabling of the different energy-saving features. The radio frequency device determines the first information based on the duration needed for the temperature differences of the radio frequency device to increase to the temperature difference threshold after the enabling of the different energy-saving features. For example, the radio frequency device may determine the enabling/disabling recommendations for the different energy-saving features by comparing the duration needed for the temperature differences of the radio frequency device to increase to the temperature difference threshold after the enabling of the different energy-saving features and the unit duration. For example, if duration needed for the temperature difference of the radio frequency device to increase to the temperature difference threshold after enabling of an energy-saving feature exceeds the unit duration, the radio frequency device determines that the energy-saving feature is recommended to be enabled. If duration needed for the temperature difference of the radio frequency device to reach the temperature difference threshold after enabling of an energy-saving feature does not exceed the unit duration, the radio frequency device determines that the energy-saving feature is recommended not to be enabled, or when the energy-saving feature has been enabled, the radio frequency device determines that the energy-saving feature is recommended to be disabled. For another example, the radio frequency device may determine the enabling/disabling recommendations for the different energy-saving features by comparing the duration needed for the temperature differences of the radio frequency device to increase to the temperature difference threshold after the enabling of the different energy-saving features. For example, the radio frequency device determines that an energy-saving feature corresponding to longest duration is recommended to be enabled, or the radio frequency device determines that an energy-saving feature corresponding to shortest duration is recommended not to be enabled. Further, the radio frequency device determines the first information based on the enabling/disabling recommendations for the different energy-saving features.

For example, the temperature difference threshold indicates the maximum temperature difference of the radio frequency device that is allowed without affecting the reliability of the solder joint of the radio frequency device. The unit duration may indicate the duration for which an energy-saving feature that is expected by the radio frequency device is enabled.

For example, the first temperature difference is 20°C, the temperature difference threshold is 25°C, and the unit duration is 15 minutes. Duration that is needed for the temperature differences of the radio frequency device to reach the temperature difference threshold after the enabling of the different energy-saving features and that is determined by the radio frequency device based on the first temperature difference and Table 1 is shown in Table 3.

**Table 3**

| Energy-saving feature | Duration needed for the temperature difference of the radio frequency device to reach the temperature difference threshold after the enabling of the energy-saving feature |
|---|---|
| Energy-saving feature 1 | 75 minutes |
| Energy-saving feature 2 | 60 minutes |
| Energy-saving feature 3 | 45 minutes |
| Energy-saving feature 4 | 30 minutes |
| Energy-saving feature 5 | 15 minutes |

It can be learned from Table 3 that, after any one of the energy-saving feature 1 to the energy-saving feature 4 is enabled, duration needed for the temperature difference of the radio frequency device to reach 25°C exceeds 15 minutes. Therefore, the radio frequency device determines that the energy-saving feature recommended to be enabled includes the energy-saving feature 1 to the energy-saving feature 4. After the energy-saving feature 5 is enabled, the duration needed for the temperature difference of the radio frequency device to reach 25°C is equal to 15 minutes. Therefore, the radio frequency device determines that the energy-saving feature 5 is recommended not to be enabled. Therefore, the radio frequency device may determine that the first information indicates that enabling/disabling recommendations for the energy-saving feature 1 to the energy-saving feature 4 are being recommended to be enabled, and/or the first information indicates that an enabling/disabling recommendation for the energy-saving feature 5 is being recommended not to be enabled.

Alternatively, it can be learned from Table 3 that, if the longest duration corresponds to the energy-saving feature 1, the radio frequency device determines that the energy-saving feature 1 is recommended to be enabled, and if the shortest duration corresponds to the energy-saving feature 5, the radio frequency device determines that the energy-saving feature 5 is recommended not to be enabled.

In another possible implementation, the radio frequency device determines the enabling/disabling recommendation for the energy-saving feature based on the first temperature difference and a second model. Input parameters of the second model are a first temperature difference and an identifier of an energy-saving feature or an energy-saving gain, and an output parameter of the second model is a recommendation on whether to enable the energy-saving feature. The second model is obtained through training based on historical data, and the historical data includes duration for which different energy-saving features are enabled, and temperature differences of the radio frequency device before and after the enabling of the different energy-saving features. The identifiers or energy-saving gains of the different energy-saving features, the duration for which the different energy-saving features are enabled, and the temperature differences of radio frequency device before the enabling of the different energy-saving features are used as input parameters for training the second model. A value relationship between the temperature differences of the radio frequency device after the enabling of the different energy-saving features and the temperature difference threshold is used to determine whether the second model is successfully trained. For example, an identifier or an energy-saving gain of the energy-saving feature 1, duration for which the energy-saving feature 1 is enabled, and a temperature difference of the radio frequency device before enabling of the energy-saving feature 1 are used as input parameters for training the first model, and the second model outputs, based on the input parameters, a recommendation on whether to enable the energy-saving feature 1. If the temperature difference of the radio frequency device after the enabling of the energy-saving feature 1 is not less than the temperature difference threshold, and the second model outputs a recommendation to not enable the energy-saving feature 1, or if the temperature difference of the radio frequency device after the enabling of the energy-saving feature 1 is less than the temperature difference threshold, and the second model outputs a recommendation that the energy-saving feature 1 is enabled, it indicates that the second model outputs a correct result. If a probability that the second model outputs a correct result is greater than a preset threshold, it is considered that the second model is successfully trained.

Specific content of the first information is not limited in embodiments of this application. When the first information includes different content, the first information may explicitly indicate an energy-saving feature recommended to be enabled, or may implicitly indicate an energy-saving feature recommended to be enabled. Alternatively, the first information may explicitly indicate an energy-saving feature recommended not to be enabled, or may implicitly indicate an energy-saving feature recommended not to be enabled.

For example, the first information includes an identifier of at least one energy-saving feature, and the at least one energy-saving feature may include the energy-saving feature recommended to be enabled and/or the energy-saving feature recommended not to be enabled.

For example, the first information includes an identifier of the energy-saving feature that is recommended to be enabled, in other words, the first information explicitly indicates the energy-saving feature recommended to be enabled. Correspondingly, the control device determines, based on the identifier of the energy-saving feature included in the first information, the energy-saving feature recommended to be enabled. The identifier of the energy-saving feature may be an energy-saving gain that can be achieved by the energy-saving feature. For example, if the first information includes identifiers of the energy-saving feature 1 to the energy-saving feature 4, the energy-saving feature that is recommended to be enabled in the first information includes the energy-saving feature 1 to the energy-saving feature 4. Correspondingly, the control device determines, based on the identifiers of the energy-saving feature 1 to the energy-saving feature 4, that the energy-saving feature recommended to be enabled includes the energy-saving feature 1 to the energy-saving feature 4.

It may be understood that, in this example, the first information may alternatively implicitly indicate the energy-saving feature recommended not to be enabled. Specifically, the energy-saving feature that is recommended not to be enabled and that is indicated by the first information corresponds to an identifier of an energy-saving feature that is not included in the first information. For example, if the first information does not include an identifier of the energy-saving feature 5, the first information further indicates the energy-saving feature 5 recommended not to be enabled.

For another example, the first information includes an identifier of the energy-saving feature recommended not to be enabled, in other words, the first information explicitly indicates the energy-saving feature recommended not to be enabled. Correspondingly, the control device determines, based on the identifier of the energy-saving feature included in the first information, the energy-saving feature recommended not to be enabled. For example, if the first information includes the identifier of the energy-saving feature 5, the control device determines, based on the first information, that the energy-saving feature 5 is recommended not to be enabled.

It may be understood that, in this example, the first information may alternatively implicitly indicate the energy-saving feature recommended to be enabled. Specifically, the energy-saving feature that is recommended to be enabled and that is indicated by the first information corresponds to the identifier of the energy-saving feature that is not included in the first information. For example, if the first information does not include the identifiers of the energy-saving feature 1 to the energy-saving feature 4, the first information further indicates that the energy-saving feature recommended to be enabled includes the energy-saving feature 1 to the energy-saving feature 4.

For another example, the first information includes the identifier of the energy-saving feature recommended to be enabled and the identifier of the energy-saving feature recommended not to be enabled, in other words, the first information explicitly indicates the energy-saving feature recommended to be enabled and the energy-saving feature recommended not to be enabled. For example, the first information is shown in Table 4.

**Table 4**

| Identifier of the energy saving feature recommended to be enabled | Identifier of the energy saving feature recommended not to be enabled |
|---|---|
| Identifier of the energy saving feature 1 | |
| Identifier of the energy saving feature 2 | |
| Identifier of the energy saving feature 3 | |
| Identifier of the energy saving feature 4 | Identifier of the energy saving feature 5 |

For another example, the first information includes first indication information corresponding to the at least one energy-saving feature, and the first indication information indicates whether to recommend enabling the at least one energy-saving feature. For example, the first indication information is 1-bit information. When the first indication information is "0", the first indication information indicates that the energy-saving feature is recommended not to be enabled, and when the first indication information is "1", the first indication information indicates that the energy-saving feature is recommended to be enabled. Alternatively, when the first indication information is "1", the first indication information indicates that the energy-saving feature is recommended not to be enabled, and when the first indication information is "0", the first indication information indicates that the energy-saving feature is recommended to be enabled. Correspondingly, the control device determines the enabling/disabling recommendation for the at least one energy-saving feature based on the first indication information corresponding to the at least one energy-saving feature.

For example, the first information is shown in Table 5. It should be noted that, in Table 5, only an example in which the first information includes a plurality of pieces of first indication information that are in a one-to-one correspondence with different energy-saving features is used, and the one-to-one correspondence between the different energy-saving features and the first indication information is not limited. For example, if a plurality of energy-saving features have a same enabling/disabling recommendation, the plurality of energy-saving features may correspond to one piece of first indication information.

**Table 5**

| Energy-saving feature | First indication information |
|---|---|
| Deep dormancy | "0" or " 1 " |
| Carrier shutdown | "0" or "1" |
| Channel shutdown | "0" or " 1 " |
| Symbol power saving | "0" or "1 " |

Optionally, the first information includes a correspondence between an identifier of an energy-saving feature and the first indication information. For example, the first information includes a one-to-one correspondence between the identifier of the energy-saving feature and the first indication information, or when a plurality of energy-saving features have a same enabling/disabling recommendation, the first information includes a many-to-one relationship between the identifiers of the energy-saving features and the first indication information.

Optionally, the first information further includes second indication information corresponding to at least one energy-saving feature, and the second indication information indicates an enabled/disabled state of the at least one energy-saving feature. Correspondingly, the control device may determine the enabled/disabled state of the at least one energy-saving feature based on the second indication information.

For example, the enabled/disabled state of the energy-saving feature includes an energy-saving state or a non-energy-saving state (or includes an enabled state or a disabled state). The energy-saving state or the enabled state indicates that the energy-saving feature is in a state in which the energy saving can be implemented, such as the enabled state, an active state, or an effective state. The non-energy-saving state or the disabled state indicates that the energy-saving feature is in a state in which the energy saving cannot be implemented, such as the disabled state, an inactive state, or an ineffective state. For example, the second indication information is 1-bit information. When the second indication information is "0", the second indication information indicates that the enabled/disabled state of the energy-saving feature is the energy-saving state, and when the second indication information is " 1", the second indication information indicates that the enabled/disabled state of the energy-saving feature is the non-energy-saving state. Alternatively, when the second indication information is " 1", the second indication information indicates that the enabled/disabled state of the energy-saving feature is the energy-saving state, and when the second indication information is "0", the second indication information indicates that the enabled/disabled state of the energy-saving feature is the non-energy-saving state.

For another example, the enabled/disabled state of the energy-saving feature includes an all energy-saving state, a partial energy-saving state, or an all non-energy-saving state. The all energy-saving state indicates that the energy-saving feature is in the enabled state, the all non-energy-saving state indicates that the energy-saving feature is in the disabled state, and the partial energy-saving state indicates that the energy-saving feature is in a partially enabled state. For example, the second indication information is 1-bit information. When the second indication information is "0", the second indication information indicates that the enabled/disabled state of the energy-saving feature is the all energy-saving state, when the second indication information is "1", the second indication information indicates that the enabled/disabled state of the energy-saving feature is the partial energy-saving state, and when the second indication information is "2", the second indication information indicates that the enabled/disabled state of the energy-saving feature is the all non-energy-saving state.

For example, the first information is shown in Table 6. It should be noted that, in Table 6, only an example in which the first information includes a plurality of pieces of second indication information that are in a one-to-one correspondence with different energy-saving features is used, and the one-to-one correspondence between the different energy-saving features and the second indication information is not limited. For example, if a plurality of energy-saving features have a same enabled/disabled state, the plurality of energy-saving features may correspond to one piece of second indication information. It should be further noted that, Table 6 is described by using an example in which the first information includes the first indication information and the second indication information. The first information may include the identifier of the energy-saving feature recommended to be enabled and the second indication information, the first information may include the identifier of the energy-saving feature recommended not to be enabled and the second indication information, or the first information includes the identifier of the energy-saving feature, the first indication information, and the second indication information.

**Table 6**

| Energy-saving feature | First indication information | Second indication information |
|---|---|---|
| Deep dormancy | "0" or " 1" | "0" or "1" or "2" |
| Carrier shutdown | "0" or " 1" | "0" or " 1" or "2" |
| Channel shutdown | "0" or "1" | "0" or " 1 " or "2" |
| Symbol power saving | "0" or " 1" | "0" or "1" or "2" |

Optionally, the first information further includes temperature information, and the temperature information is used to determine the first temperature difference of the radio frequency device.

For example, the temperature information is the first temperature difference of the radio frequency device, in other words, the first information further includes the first temperature difference.

For another example, the temperature information includes a lowest temperature value and a highest temperature value of the radio frequency device in the first detection periodicity, in other words, the first information further includes the lowest temperature value and the highest temperature value of the radio frequency device in the first detection periodicity.

For still another example, the temperature information includes a difference between the first temperature difference of the radio frequency device and the temperature difference threshold, in other words, the first information further includes the difference between the first temperature difference of the radio frequency device and the temperature difference threshold.

S620. The control device sends a first instruction. Correspondingly, in S620, the radio frequency device receives the first instruction.

The first instruction instructs to enable a first energy-saving feature and/or disable a second energy-saving feature, and the first instruction is determined by the control device based on the first information. The first energy-saving feature includes at least one energy-saving feature that is recommended to be enabled in the first information, and the second energy-saving feature includes at least one energy-saving feature that is recommended not to be enabled in the first information. For example, if the energy-saving feature that is recommended to be enabled in the first information includes the energy-saving feature 1 to the energy-saving feature 4, the first energy-saving feature includes one or more of the energy-saving feature 1 to the energy-saving feature 4, and the second energy-saving feature may include the energy-saving feature 5.

Optionally, the first energy-saving feature is an energy-saving feature that is in the disabled state and that is in the energy-saving feature recommended to be enabled in the first information, and the second energy-saving feature is an energy-saving feature that is in the enabled state and that is in the energy-saving feature recommended not to be enabled in the first information.

For example, if the energy-saving feature that is recommended to be enabled in the first information includes all energy-saving features, the first instruction determined by the control device based on the first information indicates to enable the first energy-saving feature. For example, all the energy-saving features include the energy-saving feature 1 to the energy-saving feature 5, and if the energy-saving feature that is recommended to be enabled in the first information includes the energy-saving feature 1 to the energy-saving feature 5, the first instruction determined by the control device indicates to enable the first energy-saving feature. The first energy-saving feature includes one or more of the energy-saving feature 1 to the energy-saving feature 5.

For another example, if the energy-saving feature that is recommended not to be enabled in the first information includes all the energy-saving features, the first instruction determined by the control device based on the first information indicates to disable the second energy-saving feature. For example, all the energy-saving features include the energy-saving feature 1 to the energy-saving feature 5, and if the energy-saving feature that is recommended not to be enabled in the first information includes the energy-saving feature 1 to the energy-saving feature 5, the first instruction determined by the control device indicates to disable the second energy-saving feature. The second energy-saving feature includes one or more enabled energy-saving features in the energy-saving feature 1 to the energy-saving feature 5. Certainly, if none of the energy-saving feature 1 to the energy-saving feature 5 is enabled, the control device may not generate the first instruction.

For another example, if the energy-saving feature that is recommended to be enabled in the first information includes some energy-saving features, and one or more energy-saving features in some energy-saving features that are recommended not to be enabled in the first information have been enabled, the first instruction determined by the control device based on the first information may indicate to enable the first energy-saving feature. In addition, the first instruction may further indicate to disable the second energy-saving feature. The first energy-saving feature includes at least one energy-saving feature that is recommended to be enabled in the first information, and the second energy-saving feature includes an enabled energy-saving feature in at least one energy-saving feature that is recommended not to be enabled in the first information.

How the control device determines an enabled/disabled state of the energy-saving feature that is recommended not to be enabled in the first information is not limited in this embodiment of this application.

For example, if the control device first indicates the radio frequency device to enable the energy-saving feature that is recommended not to be enabled in the first information, the control device determines that the energy-saving feature that is recommended not to be enabled in the first information has been enabled.

For another example, if the first information includes second indication information corresponding to different energy-saving features, the control device may determine enabled/disabled states of the different energy-saving features based on the second indication information.

Optionally, when determining the first energy-saving feature based on the energy-saving feature that is recommended to be enabled in the first information, the control device may further consider activation conditions of different energy-saving features. In other words, the first energy-saving feature may be an energy-saving feature that meets an activation condition and that is in the energy-saving feature recommended to be enabled in the first information. For example, the energy-saving feature that is recommended to be enabled in the first information includes the energy-saving feature 1 to the energy-saving feature 4. If the control device determines that activation conditions of the energy-saving feature 1 and the energy-saving feature 2 are met, the first instruction determined by the control device may indicate to enable the energy-saving feature 1 and/or the energy-saving feature 2.

Optionally, if the first information further includes the temperature information, the control device may determine the first instruction based on the temperature information, the energy-saving feature that is recommended to be enabled and/or the energy-saving feature that is recommended not to be enabled in the first information.

For example, the control device first determines the first temperature difference of the radio frequency device based on the temperature information, and then determines an enabling/disabling policy for at least one energy-saving feature based on the first temperature difference and degrees of impact of different energy-saving features on the temperature difference of the radio frequency device. The enabling/disabling policy for the energy-saving feature includes allowing the energy-saving feature to be enabled or not allowing the energy-saving feature to be enabled. Further, the control device determines the first instruction according to the enabling/disabling policy for the at least one energy-saving feature and/or the first information.

For example, if the enabling/disabling policy that is for the at least one energy-saving feature and that is determined by the control device matches the enabling/disabling recommendation that is for the at least one energy-saving feature and that is indicated by the first information, the control device determines the first instruction according to the enabling/disabling policy for the at least one energy-saving feature or the enabling/disabling recommendation for the at least one energy-saving feature. For example, if an enabling/disabling policy that is for the energy-saving feature 1 and that is determined by the control device is allowing to enable the energy-saving feature 1, and an enabling/disabling recommendation that is for the energy-saving feature 1 and that is indicated by the first information is a recommendation to enable the energy-saving feature 1, the control device determines the first instruction according to the enabling/disabling policy or the enabling/disabling recommendation for the energy-saving feature 1.

For another example, if the enabling/disabling policy that is for the at least one energy-saving feature and that is determined by the control device is different from the enabling/disabling recommendation that is for the at least one energy-saving feature and that is indicated by the first information, the control device determines the first instruction according to the enabling/disabling policy for the at least one energy-saving feature. For example, if the enabling/disabling policy that is for the energy-saving feature 1 and that is determined by the control device is not allowing to enable the energy-saving feature 1, and the enabling/disabling recommendation that is for the energy-saving feature 1 and that is indicated by the first information is a recommendation to enable the energy-saving feature 1, the control device determines the first instruction according to the enabling/disabling policy for the energy-saving feature 1.

A method for the control device to determine the enabling/disabling policy for the at least one energy-saving feature is the same as the method for the radio frequency device to determine the enabling/disabling recommendation for the at least one energy-saving feature. For brevity, details are not described in this embodiment of this application.

Optionally, the method 600 further includes S630.

S630. The radio frequency device enables the first energy-saving feature and/or disables the second energy-saving feature based on the first instruction.

Optionally, if the temperature difference of the radio frequency device changes after the radio frequency device enables the first energy-saving feature and/or disables the second energy-saving feature based on the first instruction, the method 600 may further continue to perform S640 to S660.

S640. The radio frequency device sends third information. Correspondingly, in S640, the control device receives the third information.

The third information indicates the enabling/disabling recommendation for the at least one energy-saving feature.

The third information is determined based on a second temperature difference of the radio frequency device and/or degrees of impact of different energy-saving features on the temperature difference of the radio frequency device. The second temperature difference indicates a difference between a highest temperature and a lowest temperature of the radio frequency device in a second detection periodicity. Duration of the second detection periodicity may be one hour, 12 hours, one day, or the like. This is not limited in embodiments of this application. It should be noted that the second temperature difference is different from the first temperature difference, and the second detection periodicity is after the first detection periodicity. For example, a difference between the second temperature difference and the first temperature difference is greater than a preset threshold.

A manner in which the radio frequency device determines the third information is the same as the manner in which the radio frequency device determines the first information. For brevity, details are not described herein.

For descriptions of specific content of the third information, refer to the foregoing descriptions of the specific content of the first information.

It should be noted that an energy-saving feature that is recommended to be enabled in the third information is not completely the same as the energy-saving feature that is recommended to be enabled in the first information, or an energy-saving feature that is recommended not to be enabled in the third information is not completely the same as the energy-saving feature that is recommended not to be enabled in the first information. For example, the energy-saving feature that is recommended to be enabled in the first information includes the energy-saving feature 1 to the energy-saving feature 4, and the energy-saving feature that is recommended to be enabled in the third information includes the energy-saving feature 1 and the energy-saving feature 2.

S650. The control device sends a third instruction. Correspondingly, in S650, the radio frequency device receives the third instruction.

The third instruction instructs to enable a fifth energy-saving feature and/or disable a sixth energy-saving feature, and the third instruction is determined by the control device based on the third information. The fifth energy-saving feature includes at least one energy-saving feature that is recommended to be enabled in the third information, and the sixth energy-saving feature includes at least one energy-saving feature that is recommended not to be enabled in the third information. For example, if the energy-saving feature that is recommended to be enabled in the third information includes the energy-saving feature 1 and the energy-saving feature 2, the fifth energy-saving feature includes the energy-saving feature 1 and/or the energy-saving feature 2, and the sixth energy-saving feature includes one or more of the energy-saving feature 3 to the energy-saving feature 5.

Specifically, a manner in which the control device determines the third instruction based on the third information is the same as the manner in which the control device determines the first instruction based on the first information. For brevity, details are not described herein.

It should be noted that the third instruction determined by the control device may be the same as or different from the first instruction. If the third instruction determined by the control device is the same as the first instruction, the control device may not send the third instruction to the radio frequency device.

S660. The radio frequency device enables the fifth energy-saving feature and/or disables the sixth energy-saving feature based on the third instruction.

In this embodiment of this application, the radio frequency device may send the enabling/disabling recommendation for the at least one energy-saving feature to the control device, to enable the control device to send the first instruction to the radio frequency device based on the enabling/disabling recommendation for the at least one energy-saving feature, so that the control device can send a more proper first instruction to the radio frequency device. For example, the first energy-saving feature that the first instruction instructs to enable may be stably enabled for a period of time without causing the temperature difference of the radio frequency device to exceed a temperature difference threshold. Therefore, it can be avoided that the radio frequency device repeatedly enables and disables an energy-saving feature, and an energy-saving gain loss caused by disabling the energy-saving feature by the radio frequency device can be avoided.

It may be understood that the radio frequency device adjusts a radio frequency resource when enabling an energy-saving feature or disabling an energy-saving feature. Therefore, based on this embodiment of this application, the radio frequency device does not repeatedly enable and disable the energy-saving feature, so that wireless service performance can be ensured.

It may be further understood that, after enabling an energy-saving feature that can be stably enabled for a period of time without causing the temperature difference of the radio frequency device to exceed the temperature difference threshold, the radio frequency device can obtain an energy saving gain corresponding to the energy saving feature, and it can also be ensured that the temperature difference of the radio frequency device is stable below the temperature difference threshold, so that more energy saving gains can be obtained while stability of the temperature difference of the radio frequency device is ensured. As described above, the temperature difference of the radio frequency device is related to the reliability of the solder joint of the radio frequency device. When the temperature difference of the radio frequency device is stable, the reliability of the solder joint of the radio frequency device may also be ensured.

In addition, when the temperature difference of the radio frequency device changes, the radio frequency device may send the third information to the control device, to enable the control device to adjust enabling and/or disabling of the energy-saving feature based on the third information in time. This helps to avoid the temperature difference of the radio frequency device exceeding the temperature difference threshold caused by the energy-saving feature being always enabled. In other words, according to this embodiment of this application, the radio frequency device sends the enabling/disabling recommendation for the energy-saving feature to the control device, to enable the control device to deliver different instructions based on the enabling/disabling recommendation, to control the radio frequency device to enable and/or disable the energy-saving feature. Therefore, the radio frequency device may control the temperature difference of the radio frequency device by enabling and/or disabling the energy-saving feature.

For example, when the temperature difference of the radio frequency device is 20°C, the energy-saving feature that is recommended to be enabled in the information (the first information or the third information) that is determined by the radio frequency device based on the temperature difference of the radio frequency device and the degrees of impact of the different energy-saving features on the temperature difference of the radio frequency device includes the energy-saving feature 1 to the energy-saving feature 4. Further, the instruction (the first instruction or the third instruction) sent by the control device to the radio frequency device based on the information received from the radio frequency device indicates to enable the energy-saving feature 4. Correspondingly, the radio frequency device enables the energy-saving feature 4 according to the instruction received from the control device. After the energy-saving feature 4 is enabled for a period of time, if the radio frequency device detects that the temperature difference of the radio frequency device is 23°C, the energy-saving feature that is recommended to be enabled in the information (the first information or the third information) that is determined by the radio frequency device based on the temperature difference of the radio frequency device and degrees of impact of different energy-saving features on the radio frequency device includes the energy-saving feature 1 and the energy-saving feature 2 Further, the instruction (the first instruction or the third instruction) sent by the control device to the radio frequency device based on the information received from the radio frequency device indicates to enable the energy-saving feature 2 and disable the energy-saving feature 4. Correspondingly, the radio frequency device enables the energy-saving feature 2 and disables the energy-saving feature 4 according to the instruction received from the control device. After the energy-saving feature 2 is enabled for a period of time, if the radio frequency device detects that the temperature difference of the radio frequency device is 25°C, and the temperature difference of the radio frequency device reaches the temperature difference threshold, the radio frequency device sends, to the control device, information (the first information or the third information) in which the energy-saving feature 1 to the energy-saving feature 5 are recommended not to be enabled. Further, the instruction (the first instruction or the third instruction) sent by the control device to the radio frequency device based on the information received from the radio frequency device indicates to disable the energy-saving feature 2. After all the energy-saving features are disabled, if the temperature difference of the radio frequency device decreases (for example, decreases to 23°C), the radio frequency device may re-indicate, to the control device, the energy-saving feature that is recommended to be enabled (for example, the energy-saving feature that is recommended to be enabled includes the energy-saving feature 1 and the energy-saving feature 2).

In addition, when the first information or the third information includes the second indication information corresponding to different energy-saving features, the control device may determine enabled/disabled statuses of the different energy-saving features based on the second indication information. Therefore, inconsistency between an enabled/disabled state of an energy-saving feature displayed on a customer interface of the control device and an actual enabled/disabled state of the energy-saving feature can be avoided. For example, a scenario in which an energy-saving feature displayed on the customer interface of the control device is enabled but the energy-saving feature is not actually enabled on the radio frequency device does not exist. After determining the actual enabled/disabled state of the energy-saving feature, the control device may send an accurate instruction to the radio frequency device. For example, if the control device determines, based on the second indication information, that the energy-saving feature 1 is in the enabled state, and determines, based on the first information, that the energy-saving feature 1 is an energy-saving feature that is recommended not to be enabled, the control device may send, to the radio frequency device, an instruction for disabling the energy-saving feature 1.

FIG. 7 is a schematic flowchart of a control method according to an embodiment of this application. As shown in FIG. 7, the method 700 may include S710 to S730. The following describes the steps in detail.

S710. A radio frequency device sends temperature information. Correspondingly, in S710, a control device receives the temperature information.

For example, the radio frequency device may be an RRU, an RU, or an AAU, and the control device may be a BBU, a BU, a CU, or a DU.

The temperature information is used to determine a first temperature difference of the radio frequency device. The first temperature difference indicates a difference between a highest temperature and a lowest temperature of the radio frequency device in a first detection periodicity. Duration of the first detection periodicity may be one hour, 12 hours, one day, or the like. This is not limited in embodiments of this application.

For example, the temperature information is the first temperature difference of the radio frequency device.

For another example, the temperature information includes a lowest temperature value and a highest temperature value of the radio frequency device in the first detection periodicity. Correspondingly, the control device determines the first temperature difference based on a difference between the highest temperature value and the lowest temperature value included in the temperature information.

For still another example, the temperature information includes a difference between the first temperature difference of the radio frequency device and a temperature difference threshold, in other words, the first information further includes the difference between the first temperature difference of the radio frequency device and the temperature difference threshold.

For example, the temperature difference threshold indicates a maximum temperature difference of the radio frequency device that is allowed without affecting reliability of a solder joint of the radio frequency device.

Optionally, in S710, the radio frequency device further sends, to the control device, second indication information corresponding to different energy-saving features. For descriptions of the second indication information, refer to S610.

S720. The control device sends a second instruction. Correspondingly, in S720, the radio frequency device receives the second instruction.

Specifically, in S720, the control device sends the second instruction to the radio frequency device based on the first temperature difference.

For example, the control device first determines an enabling/disabling policy for at least one energy-saving feature based on the first temperature difference and/or degrees of impact of different energy-saving features on a temperature difference of the radio frequency device, and then determines the second instruction according to the enabling/disabling policy for the at least one energy-saving feature. The second instruction instructs to enable the at least one energy-saving feature and/or disable the at least one energy-saving feature. The enabling/disabling policy for the energy-saving feature includes allowing the energy-saving feature to be enabled or not allowing the energy-saving feature to be enabled.

For descriptions of the degrees of impact of the different energy-saving features on the temperature difference of the radio frequency device, refer to the foregoing S610.

A manner in which the control device determines the enabling/disabling policy for the energy-saving feature is not limited in this embodiment of this application.

In a possible implementation, the control device determines the enabling/disabling policy for the energy-saving feature based on the first temperature difference. For example, if the first temperature difference is low (for example, the first temperature difference is 1/2 of the temperature difference threshold), the control device determines that all energy-saving features are allowed to be enabled. If the first temperature difference is high (for example, the first temperature difference is close to the temperature difference threshold), the control device determines that all the energy-saving features are not allowed to be enabled.

In a possible implementation, the control device determines enabling/disabling policies for different energy-saving features based on the degrees of impact of different energy-saving features on the temperature difference of the control device. For example, the control device determines that an energy-saving feature that has a maximum impact on the temperature difference of the radio frequency device is allowed not to be enabled. Alternatively, the control device determines that an energy-saving feature that has a minimum impact on the temperature difference of the radio frequency device is not allowed to be enabled.

In a possible implementation, the control device determines, based on the first temperature difference and the degrees of impact of the different energy-saving features on the temperature difference of the radio frequency device, the temperature differences of the radio frequency device after the enabling of the different energy-saving features for unit duration. The control device determines the enabling/disabling policy for the energy-saving feature based on the temperature differences of the radio frequency device after the enabling of the different energy-saving features for the unit duration. For example, the control device may determine the enabling/disabling policies for the different energy-saving features by comparing the temperature differences of the radio frequency device after enabling of the different energy-saving features for preset duration and the temperature difference threshold. For example, if the temperature difference of the radio frequency device after an energy-saving feature is enabled for the unit duration is not lower than the temperature difference threshold, the control device determines that the energy-saving feature is not allowed to be enabled, or when the energy-saving feature has been enabled, the control device determines to disable the energy-saving feature. If the temperature difference of the radio frequency device after an energy-saving feature is enabled for the unit duration is lower than the temperature difference threshold, the control device determines that the energy-saving feature is allowed to be enabled. For another example, the control device may determine the enabling/disabling policies for the different energy-saving features by comparing the temperature differences of the radio frequency device after the enabling of the different energy-saving features for the unit duration. For example, the control device determines that an energy-saving feature corresponding to a minimum temperature difference is allowed to be enabled, or the control device determines that an energy-saving feature corresponding to a maximum temperature difference is not allowed to be enabled.

For example, the temperature difference threshold indicates the maximum temperature difference of the radio frequency device that is allowed without affecting the reliability of the solder joint of the radio frequency device. The unit duration may indicate expected duration for which an energy-saving feature is enabled.

For example, the control device determines, based on a first model, the temperature differences of the radio frequency device after the enabling of the different energy-saving features for the unit duration. For descriptions of the first model, refer to the foregoing S610, and for descriptions of determining, based on the first model, the temperature differences of the radio frequency device after the enabling of the different energy-saving features for the unit duration, refer to the foregoing S610.

In another possible implementation, the control device determines, based on the first temperature difference and the degrees of impact of the different energy-saving features on the temperature difference of the radio frequency device, duration needed for the temperature differences of the radio frequency device to increase to the temperature difference threshold after the enabling of the different energy-saving features. The radio frequency device determines the enabling/disabling policy for the energy-saving feature based on the duration needed for the temperature differences of the radio frequency device to increase to the temperature difference threshold after the enabling of the different energy-saving features. For example, the control device may determine the enabling/disabling policies for the different energy-saving features by comparing the duration needed for the temperature differences of the radio frequency device to increase to the temperature difference threshold after the enabling of the different energy-saving features and the unit duration. For example, if duration needed for the temperature difference of the radio frequency device to increase to the temperature difference threshold after enabling of an energy-saving feature exceeds the unit duration, the control device determines that the energy-saving feature is allowed to be enabled. If duration needed for the temperature difference of the radio frequency device to reach the temperature difference threshold after enabling of an energy-saving feature does not exceed the unit duration, the radio frequency device determines that the energy-saving feature is not allowed to be enabled, or when the energy-saving feature has been enabled, the radio frequency device determines to disable the energy-saving feature. For another example, the control device may determine the enabling/disabling policies for the different energy-saving features by comparing the duration needed for the temperature differences of the radio frequency device to increase to the temperature difference threshold after the enabling of the different energy-saving features. For example, the control device determines that an energy-saving feature corresponding to longest duration is allowed to be enabled, or the radio frequency device determines that an energy-saving feature corresponding to shortest duration is not allowed to be enabled.

Further, the control device determines the second instruction according to the enabling/disabling policies for the different energy-saving features, and the second instruction instructs to enable at least one energy-saving feature and/or disable at least one energy-saving feature. Optionally, if the control device receives the second indication information corresponding to the different energy-saving features, the control device determines enabled/disabled states of the different energy-saving features based on the second indication information, and determines the second instruction with reference to the enabled/disabled states of the different energy-saving features and the enabling/disabling policies for the different energy-saving features. For example, if an enabled/disabled state of an energy-saving feature 1 is an energy-saving state, and an enabling/disabling policy for the energy-saving feature 1 is not allowing the energy-saving feature 1 to be enabled, the second instruction may indicate to disable the energy-saving feature 1.

Optionally, when determining, according to the enabling/disabling policy for the energy-saving feature, the energy-saving feature to be enabled, the control device may further consider activation conditions of different energy-saving features. In other words, the energy-saving feature indicated to be enabled is an energy-saving feature that meets the activation condition and that is in the energy-saving features that are allowed to be enabled.

Optionally, the method 700 further includes S730.

S730. The radio frequency device enables at least one energy-saving feature and/or disables at least one energy-saving feature based on the second instruction.

In this embodiment of this application, the control device determines the enabling/disabling policies for the different energy-saving features based on the temperature difference of the radio frequency device and/or the degrees of impact of the different energy-saving features on the temperature difference of the radio frequency device. This helps determine an energy-saving feature that can be stably enabled for a period of time without causing the temperature difference of the radio frequency device to exceed the temperature difference threshold. Therefore, it can be avoided that the radio frequency device repeatedly enables and disables an energy-saving feature, and an energy-saving gain loss caused by disabling the energy-saving feature by the radio frequency device can be avoided. It may be understood that the radio frequency device adjusts a radio frequency resource when enabling an energy-saving feature or disabling an energy-saving feature. Therefore, based on this embodiment of this application, the radio frequency device does not repeatedly enable and disable the energy-saving feature, so that wireless service performance can be ensured.

In addition, the radio frequency device may further send the second indication information corresponding to the different energy-saving features to the control device, so that the control device may determine enabled/disabled statuses of the different energy-saving features based on the second indication information. Therefore, inconsistency between an enabled/disabled state of an energy-saving feature displayed on a customer interface of the control device and an actual enabled/disabled state of the energy-saving feature is avoided. For example, a scenario in which an energy-saving feature displayed on the customer interface of the control device is enabled but the energy-saving feature is not actually enabled on the radio frequency device does not exist. After determining the actual enabled/disabled state of the energy-saving feature, the control device may send an accurate instruction to the radio frequency device. For example, if the control device determines, based on the second indication information, that an energy-saving feature 1 is in an enabled state, and determines, based on the first information, that the energy-saving feature 1 is an energy-saving feature that is recommended not to be enabled, the control device may send, to the radio frequency device, an instruction for disabling the energy-saving feature 1.

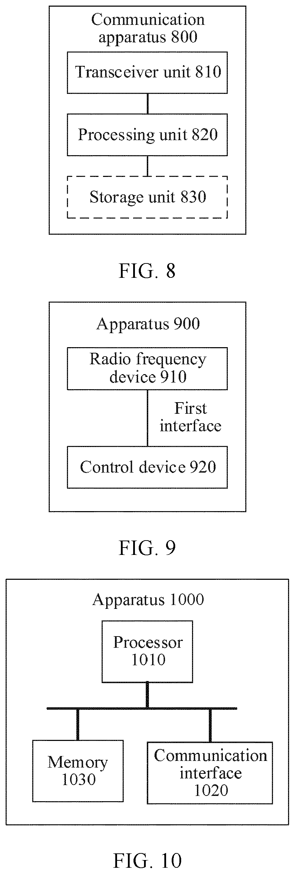

The foregoing describes in detail the methods provided in embodiments of this application with reference to FIG. 6 and FIG. 7. The following describes in detail apparatuses provided in embodiments of this application with reference to FIG. 8 to FIG. 11. It should be understood that descriptions of apparatus embodiments correspond to the descriptions of the method embodiments. Therefore, for content that is not described in detail, refer to the foregoing method embodiments. For brevity, details are not described herein again.

FIG. 8 is a schematic block diagram of an apparatus 800 according to an embodiment of this application. As shown in the figure, the apparatus 800 may include a transceiver unit 810 and a processing unit 820.

In a possible design, the apparatus 800 may be the radio frequency device in the foregoing method embodiments, or may be a chip configured to implement a function of the radio frequency device in the foregoing method embodiments.

It should be understood that the apparatus 800 may correspond to the radio frequency device in the method 600 or the method 700 according to the embodiments of this application. The apparatus 800 may include units configured to perform the method performed by the radio frequency device in the method 600 in FIG. 6 or the method 700 in FIG. 7. In addition, the units in the apparatus 800 and the foregoing other operations and/or functions are separately intended to implement corresponding procedures of the method 600 in FIG. 6 or the method 700 in FIG. 7. It should be understood that a specific process in which the units perform the foregoing corresponding steps is described in detail in the foregoing method embodiments, and for brevity, details are not described herein again.

In another possible design, the apparatus 800 may be the control device in the foregoing method embodiments, or may be a chip configured to implement a function of the control device in the foregoing method embodiments.

It should be understood that the apparatus 800 may correspond to the control device in the method 600 or the method 700 according to the embodiments of this application. The apparatus 800 may include units configured to perform the method performed by the control device in the method 600 in FIG. 6 or the method 700 in FIG. 7. In addition, the units in the apparatus 800 and the foregoing other operations and/or functions are separately intended to implement corresponding procedures of the method 600 in FIG. 6 or the method 700 in FIG. 7. It should be understood that a specific process in which the units perform the foregoing corresponding steps is described in detail in the foregoing method embodiments, and for brevity, details are not described herein again.

It should be further understood that the transceiver unit 810 in the apparatus 800 may correspond to a transceiver 1020 in an apparatus 1000 shown in FIG. 10, and the processing unit 820 in the apparatus 800 may correspond to a processor 1010 in the apparatus 1000 shown in FIG. 10.

It should be further understood that, when the apparatus 800 is a chip, the chip includes a transceiver unit and a processing unit. The transceiver unit may be an input/output circuit or a communication interface. The processing unit may be a processor, a microprocessor, or an integrated circuit that is integrated on the chip.

The transceiver unit 810 is configured to implement a signal receiving and sending operation of the apparatus 800, and the processing unit 820 is configured to implement a signal processing operation of the apparatus 800.

Optionally, the apparatus 800 further includes a storage unit 830, and the storage unit 830 is configured to store instructions.

FIG. 9 is a schematic block diagram of an apparatus 900 according to an embodiment of this application. As shown in FIG. 9, the apparatus 900 includes a radio frequency module 910 and a control module 920. The radio frequency module 910 and the control module 920 are connected through a first interface. For descriptions of the first interface, refer to the foregoing descriptions. The radio frequency module 910 is configured to perform the method performed by the radio frequency device in FIG. 6 or FIG. 7, and the control module 920 is configured to perform the method performed by the control device in FIG. 6 or FIG. 7. For example, the radio frequency module is an RRU, an RU, or an AAU, and the control module is a BBU, a BU, a CU, or a DU.

FIG. 10 is a schematic block diagram of an apparatus 1000 according to an embodiment of this application. As shown in FIG. 10, the apparatus 1000 includes at least one processor 1010 and a transceiver 1020. The processor 1010 is coupled to a memory, and is configured to execute instructions stored in the memory, to control the transceiver 1020 to send a signal and/or receive a signal. Optionally, the apparatus 1000 further includes a memory 1030, configured to store instructions.

It should be understood that the processor 1010 and the memory 1030 may be integrated into one processing apparatus. The processor 1010 is configured to execute program code stored in the memory 1030 to implement the foregoing functions. During specific implementation, the memory 1030 may alternatively be integrated into the processor 1010, or may be independent of the processor 1010.

It should be further understood that the transceiver 1020 may include a receiver (or referred to as a receive machine) and a transmitter (or referred to as a transmit machine). The transceiver 1020 may further include an antenna. There may be one or more antennas. Alternatively, the transceiver 1020 may further be a communication interface or an interface circuit.

When the apparatus 1000 is a chip, the chip includes a transceiver unit and a processing unit. The transceiver unit may be an input/output circuit or a communication interface. The processing unit may be a processor, a microprocessor, or an integrated circuit that is integrated on the chip.

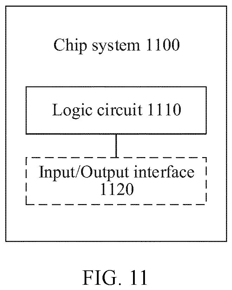

FIG. 11 is a schematic diagram of a chip system according to an embodiment of this application. The chip system herein may alternatively be a system composed of circuits. The chip system 1100 shown in FIG. 11 includes a logic circuit 1110 and an input/output interface (input/output interface) 1120. The logic circuit is configured to be coupled to an input interface, and transmit data (for example, first indication information) through the input/output interface, to perform the method shown in FIG. 6 or FIG. 7.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps of the foregoing method may be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or the processor may be any conventional processor or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

According to the method provided in the embodiments of this application, this application further provides a computer program product. The computer program product includes computer program code. When the computer program code is run on a computer, the computer is enabled to perform the method according to any one of the embodiments shown in FIG. 6 and FIG. 7.

According to the method provided in the embodiments of this application, this application further provides a computer-readable medium. The computer-readable medium stores program code. When the program code is run on a computer, the computer is enabled to perform the method according to any one of the embodiments shown in FIG. 6 and FIG. 7.

According to the method provided in the embodiments of this application, this application further provides a system, including the foregoing radio frequency device and the control device.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer instructions may be stored in a computer-readable storage medium, or may be transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, S SD)), or the like.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
sending, by a radio frequency device, first information to a control device, wherein the first information indicates an enabling/disabling recommendation for at least one energy-saving feature; and
receiving, by the radio frequency device, an instruction from the control device, wherein the instruction instructs to enable a first energy-saving feature and/or disable a second energy-saving feature, the first energy-saving feature comprises at least one energy-saving feature that is recommended to be enabled in the first information, and the second energy-saving feature comprises at least one energy-saving feature that is recommended not to be enabled in the first information.

2. The method according to claim 1, wherein the method further comprises:
enabling, by the radio frequency device, the first energy-saving feature and/or disabling the second energy-saving feature according to the instruction.

3. The method according to claim 1 or 2, wherein the first information is determined based on a temperature difference of the radio frequency device and/or degrees of impact of different energy-saving features on the temperature difference of the radio frequency device.

4. The method according to any one of claims 1 to 3, wherein the method further comprises:
determining, by the radio frequency device based on the temperature difference and the degrees of impact of the different energy-saving features on the temperature difference of the radio frequency device, temperature differences of the radio frequency device after enabling of the different energy-saving features for unit duration; and
determining, by the radio frequency device, the first information based on the temperature differences of the radio frequency device after the enabling of the different energy-saving features for the unit duration.

5. The method according to any one of claims 1 to 3, wherein the method further comprises:
determining, by the radio frequency device based on the temperature difference and the degrees of impact of the different energy-saving features on the temperature difference of the radio frequency device, duration needed for the temperature differences of the radio frequency device to increase to a temperature difference threshold after enabling of the different energy-saving features; and
determining, by the radio frequency device, the first information based on the duration needed for the temperature differences of the radio frequency device to increase to the temperature difference threshold after the enabling of the different energy-saving features.

6. The method according to any one of claims 1 to 5, wherein the first information comprises an identifier of the at least one energy-saving feature.

7. The method according to any one of claims 1 to 6, wherein the first information comprises first indication information corresponding to the at least one energy-saving feature, and the first indication information indicates whether to recommend enabling the at least one energy-saving feature.

8. The method according to any one of claims 1 to 7, wherein the first information further comprises second indication information corresponding to the at least one energy-saving feature, and the second indication information indicates an enabled/disabled state of the at least one energy-saving feature.

9. The method according to claim 8, wherein the first energy-saving feature is an energy-saving feature in a disabled state in the at least one energy-saving feature, and the second energy-saving feature is an energy-saving feature in an enabled state in the at least one energy-saving feature.

10. The method according to any one of claims 1 to 9, wherein the first information further comprises temperature information, and the temperature information is used to determine the temperature difference of the radio frequency device.

11. A control method, comprising:
receiving, by a control device, first information from a radio frequency device, wherein the first information indicates an enabling/disabling recommendation for at least one energy-saving feature; and
sending, by the control device, an instruction to the radio frequency device based on the first information, wherein the instruction instructs to enable a first energy-saving feature and/or disable a second energy-saving feature, the first energy-saving feature comprises at least one energy-saving feature that is recommended to be enabled in the first information, and the second energy-saving feature comprises at least one energy-saving feature that is recommended not to be enabled in the first information.

12. The method according to claim 11, wherein the first information is determined based on a temperature difference of the radio frequency device and/or degrees of impact of different energy-saving features on the temperature difference of the radio frequency device.

13. The method according to claim 11 or 12, wherein the first information comprises an identifier of the at least one energy-saving feature.

14. The method according to any one of claims 11 to 13, wherein the first information comprises first indication information corresponding to the at least one energy-saving feature, and the first indication information indicates whether to recommend enabling the at least one energy-saving feature.

15. The method according to any one of claims 11 to 14, wherein the first information further comprises second indication information corresponding to the at least one energy-saving feature, the second indication information indicates an enabled/disabled state of the at least one energy-saving feature, and the method further comprises:
determining, by the control device, the enabled/disabled state of the at least one energy-saving feature based on the second indication information.

16. The method according to claim 15, wherein the first energy-saving feature is an energy-saving feature in a disabled state in the at least one energy-saving feature, and the second energy-saving feature is an energy-saving feature in an enabled state in the at least one energy-saving feature.

17. The method according to any one of claims 11 to 16, wherein the first information further comprises temperature information, and the temperature information is used to determine the temperature difference of the radio frequency device; and
the sending, by the control device, an instruction to the radio frequency device based on the first information comprises:
sending, by the control device, the instruction to the radio frequency device based on the temperature difference and the first information.

18. A control method, comprising:
receiving, by a control device, temperature information from a radio frequency device, wherein the temperature information is used to determine a temperature difference of the radio frequency device;
determining, by the control device, an enabling/disabling policy for at least one energy-saving feature based on the temperature difference and/or degrees of impact of different energy-saving features on the temperature difference of the radio frequency device; and
sending, by the control device, an instruction to the radio frequency device according to the enabling/disabling policy for the at least one energy-saving feature, wherein the instruction instructs to enable at least one energy-saving feature and/or disable at least one energy-saving feature.

19. The method according to claim 18, wherein the determining, by the control device, an enabling/disabling policy for at least one energy-saving feature based on the temperature difference and degrees of impact of different energy-saving features on the temperature difference of the radio frequency device comprises:
determining, by the control device based on the temperature difference and the degrees of impact of the different energy-saving features on the temperature difference of the radio frequency device, temperature differences of the radio frequency device after enabling of the different energy-saving features for unit duration; and
determining, by the control device, the enabling/disabling policy for the at least one energy-saving feature based on the temperature differences of the radio frequency device after the enabling of the different energy-saving features for the unit duration.

20. The method according to claim 18, wherein the determining, by the control device, an enabling/disabling policy for at least one energy-saving feature based on the temperature difference and degrees of impact of different energy-saving features on the temperature difference of the radio frequency device comprises:
determining, by the control device based on the temperature difference and the degrees of impact of the different energy-saving features on the temperature difference of the radio frequency device, duration needed for the temperature differences of the radio frequency device to increase to a temperature difference threshold after enabling of the different energy-saving features; and
determining, by the control device, the enabling/disabling policy for the at least one energy-saving feature based on the duration needed for the temperature differences of the radio frequency device to increase to the temperature difference threshold after the enabling of the different energy-saving features.

21. The method according to any one of claims 18 to 20, wherein the method further comprises:
receiving, by the control device, indication information that is from the radio frequency device and that corresponds to the at least one energy-saving feature, wherein the indication information indicates an enabled/disabled state of the at least one energy-saving feature; and
determining, by the control device, the enabled/disabled state of the at least one energy-saving feature based on the indication information.

22. The method according to claim 21, wherein the at least one energy-saving feature that the instruction instructs to enable is an energy-saving feature in a disabled state, and the at least one energy-saving feature that the instruction instructs to disable is an energy-saving feature in an enabled state.

23. A control method, comprising:
sending, by a radio frequency device, temperature information to a control device, wherein the temperature information is used to determine a temperature difference of the radio frequency device; and
receiving, by the radio frequency device, an instruction from the control device, wherein the instruction instructs to enable at least one energy-saving feature and/or disable at least one energy-saving feature.

24. The method according to claim 23, wherein the method further comprises:
sending, by the radio frequency device, indication information to the control device, wherein the indication information indicates an enabled/disabled state of at least one energy-saving feature.

25. The method according to claim 24, wherein the at least one energy-saving feature that the instruction instructs to enable is an energy-saving feature in a disabled state, and the at least one energy-saving feature that the instruction instructs to disable is an energy-saving feature in an enabled state.

26. An apparatus, configured to implement the method according to any one of claims 1 to 10, or configured to implement the method according to any one of claims 23 to 25.

27. An apparatus, configured to implement the method according to any one of claims 11 to 17, or configured to implement the method according to any one of claims 18 to 22.

28. An apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 10; or to enable the apparatus to perform the method according to any one of claims 23 to 25.

29. An apparatus, comprising at least one processor, wherein the at least one processor is coupled to at least one memory, and the at least one processor is configured to execute a computer program or instructions stored in the at least one memory, to enable the apparatus to perform the method according to any one of claims 11 to 17, or to enable the apparatus to perform the method according to any one of claims 18 to 22.

30. A system, comprising the apparatus according to claims 26 and 27, or comprising the apparatus according to claims 28 and 29.
